# EUROPÄISCHE PATENTSCHRIFT

(11) **EP 3 956 128 B1**
(45) Veröffentlichungstag und Bekanntmachung des Hinweises auf die Patenterteilung: **29.03.2023**
(21) Anmeldenummer: 20720016.3
(22) Anmeldetag: 16.04.2020
(51) Int. Cl.: B29C 64/209, B29C 64/112, B29C 64/393, B29C 64/241, B29C 64/277, B33Y 10/00, B33Y 30/00, B33Y 50/02

(54) **VERFAHREN ZUM HERSTELLEN MINDESTENS EINER FESTKÖRPERSCHICHT GEMÄSS VORGEGEBENER GEOMETRIEDATEN**
METHOD FOR PRODUCING AT LEAST ONE SOLID LAYER IN ACCORDANCE WITH SPECIFIED GEOMETRY DATA
PROCÉDÉ DE FABRICATION D'AU MOINS UNE COUCHE SOLIDE CONFORMÉMENT À DES DONNÉES GÉOMÉTRIQUES SPÉCIFIÉES

(30) Priorität: 17.04.2019 DE 102019002809
(43) Veröffentlichungstag der Anmeldung: 23.02.2022
(73) Patentinhaber: dp polar GmbH, 76344 Eggenstein-Leopoldshafen (DE)
(72) Erfinder: MATHEA, Hans, 76344 Eggenstein-Leopoldshafen (DE)
(74) Vertreter: Huwer, Andreas
(86) Internationale Anmeldenummer: PCT/EP2020/060756
(87) Internationale Veröffentlichungsnummer: WO 2020/212519

(56) Entgegenhaltungen:
- WO-A1-2016/009426
- WO-A2-2004/106041
- DE-A1-102016 013 317
- DE-A1-102016 013 319
- US-A1- 2018 111 322

## Beschreibung

Die Erfindung betrifft ein Verfahren zum Herstellen mindestens einer Festkörperschicht gemäß vorgegebener Geometriedaten, die in einem Speicher hinterlegt sind.

Bei einem aus der US 2004/0265413 A1 und der WO 2004/106041 A2 bekannten Verfahren werden Geometriedaten, die als Druckpunkte eines rechtwinkligen Koordinatensystems in einem Speicher hinterlegt sind, mit Hilfe einer Koordinatentransformationseinrichtung in Polarkoordinaten konvertiert. Bei dem Verfahren wird ein 3D-Drucker bereitgestellt, der zwei Emitteranordnungen mit jeweils mehreren zueinander beabstandeten, als Düsen ausgebildeten Emittern aufweist, die zur Abgabe von Materialportionen eines flüssigen Materials auf die Unterlage dienen. Die Unterlage ist kreisscheibenförmig ausgestaltet und mit Hilfe eines Antriebs um eine Drehachse relativ zur Emitteranordnung drehpositionierbar. Mit Hilfe eines Encoders wird ein Drehlagesignal für die Relativposition zwischen den Emitteranordnungen und der Unterlage erzeugt.

Jede Emitteranordnung weist eine Vielzahl von handelsüblichen Druckköpfen auf, die auf einem an einer Schiebeführung angeordneten Druckkopf-Träger radial zur Rotationsachse inkrementell verschiebbar sind. Hierdurch sollen Unregelmäßigkeiten beim Drucken, die durch nicht funktionierende Druckköpfe, Aussetzer oder falsch positionierte Emitter verursacht sein können, korrigiert werden, indem die Position der Emitteranordnung von Schicht zu Schicht verändert wird. Fehler, die durch das Aussetzen eines Emitters verursacht sind, sind somit bei den einzelnen gedruckten Schichten an unterschiedlichen Stellen angeordnet und werden gemittelt. Außerdem können die Emitteranordnungen mit Hilfe der Druckkopf-Träger zwischen eine Druckposition, in der die Emitter über der Unterlage angeordnet
sind, einer Diagnoseposition, in der die Emitter an einer neben der Unterlage befindlichen Diagnoseeinrichtung positioniert sind, und eine Service-Position angeordnet werden, in der die Emitter neben der Unterlage und neben der Service-Position positioniert sind. In der Service-Position können die Emitter gereinigt oder ausgewechselt werden.

Wie die Emitter der Emitteranordnungen genau angeordnet sind und wie sie während des Druckens angesteuert werden, ist in der Offenlegungsschrift nicht näher offenbart.

Das vorbekannte Verfahren hat den Nachteil, dass beim radialen Verschieben der Druckkopf-Träger Positionierungenauigkeiten auftreten können. Außerdem sind das Verschieben der Druckkopf-Träger und die zahlreichen Druckköpfe aufwändig.

Aus der Praxis sind ferner ein 3D-Drucker bekannt, der eine Halterung aufweist, an der eine etwa rechteckige, sich in einer Horizontalebene erstreckende Unterlage zur Aufnahme eines durch schichtweisen Materialauftrag herzustellenden Formgegenstands angeordnet ist. Der Drucker dient zum Drucken des Formgegenstands in einer kartesischen Koordinatenmatrix. Für den Formgegenstand werden Geometriedaten bereitgestellt, die Druckpunkten zugeordnet sind, die in einer kartesischen Koordinatenmatrix liegen.

Über der Unterlage ist ein Druckkopf an der Halterung angeordnet, der eine Düsenanordnung zur Abgabe von Materialportionen eines fließfähigen Materials auf die Unterlage aufweist, die nachstehend auch als Emitteranordnung bezeichnet wird. Die Emitteranordnung hat eine Vielzahl von als Düsen ausgebildeten Emittern, die matrixförmig in parallel zueinander versetzten Emitterspalten und parallel zueinander versetzen, quer zu den Emitterspalten verlaufenden Emitterzeilen in einem schiefwinkligen geradlinigen Koordinatensystem angeordnet sind. Zueinander benachbarte Emitterspalten sind jeweils in Erstreckungsrichtung der Emitterspalten zueinander versetzt, wobei der Versatz kleiner ist als der Versatz, den die Emitter in den Emitterspalten haben. Die Emitterspalten verlaufen parallel zu den beiden kurzen Rändern der rechteckigen Unterlage (X-Achse). Die Emitter sind derart angeordnet, dass jeder Emitter der Emitteranordnung in der parallel zu den beiden kurzen Rändern der rechteckigen Unterlage verlaufenden Richtung an einer anderen X-Position der kartesischen Koordinatenmatrix liegt. Dabei ist jeder X-Position der Koordinatenmatrix jeweils genau ein Emitter der Emitteranordnung zugeordnet.

Die Emitteranordnung ist mittels einer an der Halterung angeordneten ersten Positioniereinrichtung parallel zur Längserstreckung der Unterlage in Y-Richtung verschiebbar und zwischen den beiden voneinander entfernten kurzen Rändern hin- und her verfahrbar. Da unmittelbar zueinander benachbarte Druckpunkte, die auf einer parallel zu den beiden kurzen Rändern der rechteckigen Unterlage in Richtung der X-Achse verlaufenden Linie liegen, mit Düsen gedruckt werden, die in unterschiedlichen Emitterspalten der Emitteranordnung angeordnet sind, wird der Druckkopf beim Drucken der zueinander benachbarten Druckpunkte der Linie derart an unterschiedlichen X-Positionen positioniert, dass der Versatz, den die unterschiedlichen Emitterspalten in Richtung der X-Achse aufweisen, kompensiert wird. Dadurch können Druckpunkte, die in X-Richtung unmittelbar nebeneinander angeordnet sind, derart dicht zueinander versetzt auf die Unterlage gedruckt werden, dass sie sich bereichsweise überlappen. Dennoch sind die Emitter der Emitteranordnung räumlich voneinander getrennt und soweit voneinander beabstandet, dass zwischen den Emittern Kanäle, welche die Emitter mit einem Reservoir für das düsengängige Material verbinden, und/oder elektrische Leiterbahnen angeordnet werden können.

Die Emitter der Emitteranordnung sind zusammen mit dem Reservoir für das düsengängige Material relativ zu der Unterlage bewegbar. Benachbart zum Drucckopf ist eine Fixiereinrichtung angeordnet, die zum Vernetzen bzw. Verfestigen der mit Hilfe der Emitteranordnung aufgetragenen Materialschicht eine ultraviolette Lichtquelle aufweist. Die Fixiereinrichtung ist zusammen mit dem Druckkopf relativ zu der Unterlage bewegbar.

Der vorbekannte 3D-Drucker hat außerdem eine zweite Positioniereinrichtung, mittels welcher die Unterlage normal zu der Ebene, in der sich die Unterlage erstreckt, auf den Druckkopf zu und von diesem weg bewegbar, also in der Höhe positionierbar ist.

Zur Herstellung eines Formgegenstands wird der Druckkopf benachbart zum ersten Rand der Unterlage in einem vorbestimmten Abstand über dieser positioniert. Aus einem Datenspeicher, in dem Geometriedaten für den herzustellenden Formgegenstand abgelegt sind, werden Daten für die Geometrie einer ersten Materialschicht in einen schnellen Druckpuffer geladen. Danach wird der Druckkopf mit Hilfe der ersten Positioniereinrichtung kontinuierlich auf den gegenüberliegenden zweiten Rand der Unterlage zu verfahren. Gleichzeitig wird durch entsprechendes Ansteuern der einzelnen Emitter der Emitteranordnung an den Stellen, an denen auf der Unterlage eine erste Materialschicht des Formgegenstands ausgebildet werden soll, jeweils eine Materialportion auf die Unterlage abgegeben. Die Ansteuerung der einzelnen Emitter erfolgt in Abhängigkeit von der aktuellen Position des Druckkopfs und in Abhängigkeit von den im Druckpuffer befindlichen Daten. Das so auf die Unterlage aufgetragene fließfähige Material wird durch Bestrahlung mit ultraviolettem Licht verfestigt, welches mit Hilfe der Fixiereinrichtung erzeugt wird.

Wenn der Druckkopf am zweiten Rand der Unterlage angekommen ist, wird die horizontale Vorschubbewegung des Druckkopfs gestoppt und aus dem Datenspeicher werden Geometriedaten für eine auf die zuvor erzeugte Materialschicht aufzutragende weitere Materialschicht in den Druckpuffer geladen. Außerdem wird die Unterlage mit Hilfe der zweiten Positioniereinrichtung um ein Maß, dass der Dicke der zuvor erzeugten Materialschicht entspricht, abgesenkt, um auf diese Materialschicht eine weitere Materialschicht aufzutragen. Nun wird der Druckkopf mit Hilfe der ersten Positioniereinrichtung kontinuierlich auf den ersten Rand der Unterlage zu bewegt. Gleichzeitig wird durch entsprechendes Ansteuern der Emitter an den Stellen, an denen auf die weitere Materialschicht ausgebildet werden soll, jeweils ein Materialtropfen auf die bereits fertig gestellte Materialschicht abgegeben. Das so auf die Unterlage aufgetragene fließfähige Polymermaterial wird wiederum durch Bestrahlung mit ultraviolettem Licht verfestigt, welches mit Hilfe der Fixiereinrichtung erzeugt wird.

Die vorstehend genannten Verfahrensschritte werden in entsprechender Weise solange wiederholt, bis alle Materialschichten des Formgegenstands fertig gestellt sind.

Das Verfahren hat den Nachteil, dass für das Abstoppen und Beschleunigen des Druckkopf-Moduls samt Zubehör an den Rändern der Unterlage Zeit benötigt wird, die zum Drucken nicht genutzt werden kann. Diese Abstoppen und Beschleunigen kann bei kleineren bis mittleren Druckflächen bis zu 50% der Gesamtdruckzeit beanspruchen und kann daher die Produktivität des Verfahrens wesentlich reduzieren. Außerdem muss der schwere Druckkopf und die damit verbundenen, relativ großen und schweren Teile, wie das Reservoir mit dem darin befindlichen fließfähigen Materialvorrat, die verschleißanfälligen Kabelschleppen und die Fixiereinrichtung nach jedem Fertigstellen einer Materialschicht angehalten und - falls eine weitere Materialschicht aufgetragen werden soll - in die entgegengesetzte Richtung beschleunigt werden. Durch die dabei auftretenden Beschleunigungskräfte wird die Mechanik der Positioniereinrichtungen belastet, was zu entsprechendem Verschleiß an den Lagern und Führungen Positioniereinrichtungen führt und damit die Genauigkeit des Druckers beeinträchtigt.

Aus der DE 10 2016 013 319 A1 und US 2018/111322 A1 sind ferner Verfahren zum Herstellen von Festkörperschichten gemäß vorgegebener Geometriedaten bekannt, bei denen die Festkörperschichten jeweils durch Abgabe von Materialportionen aus einem Druckkopf auf eine um eine Drehachse rotierende Unterlage aufgebracht werden. Die Geometriedaten sind als Bildpunkte eines kartesischen Koordinatensystems in einem ersten Speicher abgelegt. In einem zweiten Speicher sind Polarkoordinatenrasterpunkte eines Polarkoordinatenrasters hinterlegt, die auf Kreislinien angeordnet sind, die einen vorbestimmten Kreislinienabstand zueinander haben, und die auf ersten Strahlen angeordnet sind, die einen ersten Winkelabstand zueinander haben sowie in Richtung des Ursprungs auf weiteren Strahlen angeordnet sind, die einen Winkelabstand zueinander haben, der größer als der erste Winkelabstand ist. Die im zweiten Speicher hinterlegten Polarkoordinatenrasterpunkte werden in Koordinaten des kartesischen Koordinatensystems transformiert und die so erhaltenen kartesischen Rasterpunkte werden mit den Bildpunkten verglichen. Der Druckkopf wird derart angesteuert, dass an den einzelnen Polarkoordinatenrasterpunkten jeweils nur dann Material abgegeben wird, wenn der Vergleich eine Übereinstimmung ergibt.

Bei einem aus der DE 10 2016 013 317 A1 bekannten Verfahren zum Herstellen eines dreidimensionalen Formgegenstands wird auf Auftragungsstellen einer um eine Rotationsachse rotierenden Unterlage ein Material für eine zu bildende Materialschicht aufgetragen. Das Material wird zunächst auf eine Trägerfolie aufgebracht, die zusammen mit dem darauf befindlichen Material über quer zur Rotationsrichtung der Unterlage zueinander versetzte Auftragungsstellen der Unterlage positioniert wird. Ein Energiestrahl, für den die Trägerfolie durchlässig ist, wird nacheinander derart an mehreren Materialabgabestellen der Trägerfolie positioniert, dass das jeweils an der betreffenden Materialabgabestelle befindliche Material erhitzt und von der Materialabgabestelle auf eine dieser zugeordnete Auftragungsstelle der Unterlage übertragen wird. Die Leistung des Energiestrahls wird derart eingestellt, dass an einer ersten Materialabgabestelle, die weiter von der Rotationsachse entfernt ist als eine zweite Materialabgabestelle, eine größere Menge Material auf die Unterlage aufgebracht wird als an der zweiten Materialabgabestelle.

Aus der WO 2016/009426 A1 ist ein Verfahren bekannt, bei dem eine schichtweise mit einem Baumaterial zu bedruckende Unterlage um eine vertikale Achse rotiert. Während der Rotation werden mittels eines Druckkopfs Materialportionen des Baumaterials in Schichten auf die Unterlage abgegeben. Der Druckkopf hat mehrere voneinander getrennte Düsen, die in unterschiedlichen Abständen von der Achse angeordnet sind und das Baumaterial mit unterschiedlichen Materialausgaberaten abgeben.

Es besteht deshalb die Aufgabe, ein Verfahren der eingangs genannten Art anzugeben, das es ermöglicht, mindestens eine Festkörperschicht entsprechend von in einem Speicher hinterlegten Geometriedaten mittels einer Emitteranordnung, bei der die Emitter in einem schiefwinkligen geradlinigen Koordinatensystem angeordnet sind, auf einfache Weise herzustellen. Dabei sollen größere Verzerrungen, die durch das von dem Koordinatensystem der Emitteranordnung abweichende, zum Drucken verwendete polare Koordinatensystem entstehen, vermieden werden, so dass trotz der Verwendung einer Emitteranordnung mit in einem schiefwinkligen
Koordinatensystem angeordneten Emittern ein akzeptables Drückbild erreicht wird.

Diese Aufgabe wird mit den Merkmalen des Patentanspruchs 1 gelöst. Dieser sieht bei einem Verfahren der eingangs genannten Art vor, dass zur Abgabe von Materialportionen eines düsengängigen Materials auf eine Unterlage und/oder eine darauf befindliche verfestigte Materialschicht mindestens eine Emitteranordnung mit mehreren zueinander beabstandeten, als Materialabgabedüsen ausgebildeten Emittern bereitgestellt wird, dass die Emitteranordnung mehrere Emitterspalten aufweist, in denen die Mittelpunkte der Emitter jeweils in gerader Linie zueinander versetzt sind, dass die Unterlage relativ zur Emitteranordnung um eine Drehachse drehpositioniert und die Materialportionen mittels der Emitter auf die Unterlage und/oder die darauf befindliche verfestigte Materialschicht aufgebracht und danach verfestigt werden, dass der Mittelpunkt des am weitesten von der Drehachse entfernten Emitters der Emitteranordnung einen ersten radialen Abstand zur Drehachse und der Mittelpunkt des am dichtesten an der Drehachse angeordneten Emitters einen zweiten radialen Abstand zur Drehachse aufweist, dass ein Triggersignal erzeugt wird, das Triggerstellen für die Drehlage der Emitteranordnung relativ zur Unterlage definiert, dass für die einzelnen Emitter in Abhängigkeit von den im Speicher abgelegten Geometriedaten und/oder in Abhängigkeit von der Position, an der der betreffende Emitter relativ zur Unterlage angeordnet ist, wenn dieser relativ zur Emitteranordnung an der jeweiligen Triggerstelle positioniert ist, jeweils ein Aktivierungssignal erzeugt und zwischengespeichert wird, dass die Emitter an den Triggerstellen jeweils derart angesteuert werden, dass nur diejenigen Emitter Material abgeben, bei denen das zuvor zwischengespeicherte Aktivierungssignal gesetzt ist, dass der Winkel zwischen zueinander benachbarten Triggerstellen derart gewählt wird, dass er dem Winkel entspricht, den eine erste Radiallinie und eine zweite Radiallinie zwischen sich einschließen, dass die erste Radiallinie von der Drehachse zum Schnittpunkt zwischen einer ersten Emitterspalte und einer zu der Drehachse konzentrischen Bezugskreislinie und die zweite Radiallinie von der Drehachse zum Schnittpunkt zwischen einer zur ersten Emitterspalte in Umfangsrichtung der Drehachse benachbarten zweiten Emitterspalte und der Bezugskreislinie verläuft, dass der Radius der Bezugskreislinie kleiner als die Summe aus 90% des ersten radialen Abstands und 10% des zweiten radialen Abstands ist, und wobei der Radius der Bezugskreislinie größer als die Summe aus 10% des ersten radialen Abstands und 90% des zweiten radialen Abstands ist. Unter einem düsengängigen Material wird ein flüssiges, pastöses oder pulverartiges Medium verstanden, welches durch eine Düse hindurch auf die Unterlage aufgetragen werden kann, insbesondere durch Druckeinwirkung auf das Medium.

Die vorstehend genannte Aufgabe wird auch mit den Merkmalen des Patentanspruchs 2 gelöst. Dieser sieht bei einem Verfahren der eingangs genannten Art vor, dass ein Behälter bereitgestellt wird, in dem mindestens eine Materialschicht aus einem flüssigen, pastösen oder pulverförmigen Material auf eine Unterlage aufgebracht wird, dass zur Bestrahlung des Materials mit einer das Material verfestigenden Strahlung eine Emitteranordnung mit mehreren zueinander beabstandeten, der Materialschicht zugewandten Strahlungs-Emittern bereitgestellt wird, wobei die Emitteranordnung mehrere Emitterspalten aufweist, in denen die Mittelpunkte der Emitter jeweils in gerader Linie zueinander versetzt sind, wobei die Unterlage relativ zur Emitteranordnung um eine Drehachse drehpositioniert und die Strahlung mittels der Emitter derart auf die Materialschicht gerichtet wird, dass das Material an mindestens einer Bestrahlungsstelle verfestigt wird, dass der Mittelpunkt des am weitesten von der Drehachse entfernten Emitters der Emitteranordnung einen ersten radialen Abstand zur Drehachse und der Mittelpunkt des am dichtesten an der Drehachse angeordneten Emitters einen zweiten radialen Abstand zur Drehachse aufweist, dass ein Triggersignal erzeugt wird, das Triggerstellen für die Drehlage der Emitteranordnung relativ zur Unterlage definiert, dass für die einzelnen Emitter in Abhängigkeit von den im Speicher abgelegten Geometriedaten und/oder in Abhängigkeit von der Position, an der der betreffende Emitter relativ zur Unterlage angeordnet ist, wenn dieser relativ zur Emitteranordnung an der jeweiligen Triggerstelle positioniert ist, jeweils ein Aktivierungssignal erzeugt und zwischengespeichert wird, dass die Emitter an den Triggerstellen jeweils derart angesteuert werden, dass nur diejenigen Emitter Strahlung abgeben, bei denen das zuvor zwischengespeicherte Aktivierungssignal gesetzt ist, dass der Winkel zwischen zueinander benachbarten Triggerstellen derart gewählt wird, dass er dem Winkel entspricht, den eine erste Radiallinie und eine zweite Radiallinie zwischen sich einschließen, dass die erste Radiallinie von der Drehachse zum Schnittpunkt zwischen einer ersten Emitterspalte und einer zu der Drehachse konzentrischen Bezugskreislinie und die zweite Radiallinie von der Drehachse zum Schnittpunkt zwischen einer zur ersten Emitterspalte in Umfangsrichtung der Drehachse benachbarten zweiten Emitterspalte und der Bezugskreislinie verläuft, dass der Radius der Bezugskreislinie kleiner als die Summe aus 90% des ersten radialen Abstands und 10% des zweiten radialen Abstands ist, und dass der Radius der Bezugskreislinie größer als die Summe aus 10% des ersten radialen Abstands und 90% des zweiten radialen Abstands ist. Die Erfindung kann also auch bei einem Verfahren zur Anwendung kommen, das dem Stereolithografieverfahren ähnelt. Der Unterschied ist, dass der Laserstrahl oder LCD/LED-Projektoren des Stereolithografieverfahrens durch die Emitteranordnung gemäß den Patentansprüchen 1 oder 2 ersetzt wird.

Den Geometriedaten können Druckpunkte zugeordnet sein, die in einer kartesischen Matrix angeordnet sind, welche Zeilen und Spalten hat, in denen jeweils mehrere Druckpunkte zueinander versetzt sind.

Bevorzugt sind den Geometriedaten Druckpunkte zugeordnet, die in einer polaren Matrix angeordnet sind, welche radial zur Drehachse verlaufende Reihen aufweist, in denen jeweils mehrere Druckpunkte zueinander versetzt sind. Hierdurch wird ein qualitativ gutes Druckbild ermöglicht. Die Reihen mit den Druckpunkten sind in Umfangsrichtung der Drehachse bevorzugt um einen Winkel zueinander versetzt, der dem Winkel entspricht, den eine erste Radiallinie und eine zweite Radiallinie zwischen sich einschließen.

Die Geometriedaten sind bevorzugt als Bitmap abgelegt und können für jeden Druckpunkt einen Aktivierungswert aufweisen. Der Aktivierungswert kann im einfachsten Fall zwei Zustände aufweisen, z.B. den logischen Wert "1", wenn an dem Druckpunkt die Festkörperschicht sein soll und den logischen Wert "0", wenn die Festkörperschicht an dem Druckpunkt nicht sein soll. Wenn für die einzelnen Druckpunkte unterschiedliche Material- oder Strahlungsenergiemengen auf die Unterlage abgegeben werden sollen, kann der Aktivierungswert auch mehr als zwei Zustände umfassen. Bei Bedarf können die Geometriedaten auch Koordinaten für Positionen der Druckpunkte aufweisen. Es ist auch denkbar, dass nur für diejenigen Druckpunkte Koordinaten bereitgestellt werden, an denen die Festkörperschicht sein soll. Ein zusätzlicher Aktivierungswert kann in diesem Fall entfallen.

In vorteilhafter Weise werden bei dem erfindungsgemäßen Verfahren die Verzerrungen, die durch die Abweichung des zum Drucken verwendeten polaren Koordinatensystems vom kartesischen Koordinatensystem, in dem die Emitter der Emitteranordnung angeordnet sind, entstehen, relativ gleichmäßig auf die Emitter verteilt. Hierdurch sind die beim Drucken maximal auftretenden Lageabweichungen zwischen der Materialabgabestelle, an der das düsengängige Material auf die Unterlage oder eine darauf befindliche verfestigte Materialschicht aufgebracht wird (Patentanspruch 1), bzw. der Bestrahlungsstelle (Patentanspruch 2) und der zugehörigen Druckpunktposition, für die im Speicher Geometriedaten hinterlegt sind, geringer als bei einem entsprechenden Verfahren, bei dem der Radius der Bezugskreislinie außerhalb des im Patentanspruch 1 angegebenen Bereichs liegt. Somit wird bei dem erfindungsgemäßen Verfahren trotz der Verwendung eines kostengünstigen Druckkopfs mit kartesisch angeordneten Emittern ein akzeptables Drückbild erreicht.

Bei einer bevorzugten Ausführungsform der Erfindung ist der Radius der Bezugskreislinie kleiner als die Summe aus 80% des ersten radialen Abstands und 20% des zweiten radialen Abstands, und der Radius der Bezugskreislinie ist größer als die Summe aus 20% des ersten radialen Abstands und 80% des zweiten radialen Abstands. Hierdurch können die maximalen Verzerrungen bzw. Lageabweichungen zwischen den Stellen, an denen das Material auf die Unterlage bzw. eine darauf befindliche verfestigte Materialschicht aufgetragen wird, und den Geometriedaten weiter reduziert werden.

Eine weitere Reduzierung der durch die unterschiedlichen Koordinatensysteme (schiefwinklig bzw. polar) maximal auftretenden Verzerrungen wird bei einer vorteilhaften Ausgestaltung der Erfindung dadurch erreicht, dass der Radius der Bezugskreislinie kleiner als die Summe aus 70% des ersten radialen Abstands und 30% des zweiten radialen Abstands ist, und dass der Radius der Bezugskreislinie größer als die Summe aus 30% des ersten radialen Abstands und 70% des zweiten radialen Abstands ist.

Bei einer Weiterbildung der Erfindung ist vorgesehen, dass der Radius der Bezugskreislinie kleiner als die Summe aus 60% des ersten radialen Abstands und 40% des zweiten radialen Abstands ist, und dass der Radius der Bezugskreislinie größer als die Summe aus 40% des Durchmessers der äußeren Kreisbahn und 60% des Durchmessers der inneren Kreisbahn ist. Insbesondere ist es vorteilhaft, wenn der Radius der Bezugskreislinie kleiner als die Summe aus 55% des ersten radialen Abstands und 45% des zweiten radialen Abstands ist, und wenn der Radius der Bezugskreislinie größer als die Summe aus 45% des Durchmessers der äußeren Kreisbahn und 55% des Durchmessers der inneren Kreisbahn ist. Hierdurch können die maximalen Verzerrungen beim Drucken weiter reduziert werden.

Bei einer vorteilhaften Ausgestaltung der Erfindung wird jeder Triggerstelle jeweils eine Emitterspalte zugeordnet, wobei die für die einzelnen Triggerstellen vorgesehenen Aktivierungssignale jeweils nur für die Emitter der der betreffenden Triggerstelle zugeordneten Emitterspalte in Abhängigkeit von den im Speicher abgelegten Geometriedaten und in Abhängigkeit von der Position, an der der betreffende Emitter angeordnet ist, erzeugt werden, und wobei die Aktivierungssignale für die nicht in dieser Emitterspalte angeordneten Emitter derart gesetzt werden, dass diese Emitter nicht aktiviert werden, wenn die Emitteranordnung relativ zur Unterlage an der Triggerstelle positioniert wird. An jeder Triggerstelle werden also jeweils nur bei einer einzigen Emitterspalte die Geometriedaten bei der Erzeugung der Materialabgabesignale berücksichtigt, während die Aktivierungssignale der verbleibenden Emitterspalte (wenn die Emitteranordnung zwei Emitterspalten hat) bzw. der verbleibenden Emitterspalten (wenn die Emitteranordnung mehr als zwei Emitterspalten hat) deaktiviert werden. Das Verfahren ist dann auf einfache Weise durchführbar, da die Geometriedaten direkt aus dem Speicher in einen Druckpuffer für die Aktivierungssignale der der Triggerstelle zugeordneten (aktiven) Emitterspalte übernommen werden können, wenn der Abstand der Mittelpunkte der innerhalb dieser Emitterspalte befindlichen Emitter mit dem entsprechenden Abstand der Druckpunkte übereinstimmt. Von Triggerstelle zu Triggerstelle wird jeweils die aktive Emitterspalte zyklisch gewechselt. So kann beispielsweise bei einer Emitteranordnung mit vier Emitterspalten an einer ersten Triggerstelle die erste Emitterspalte, an einer zweiten Triggerstelle die zweite Emitterspalte, an einer dritten Triggerstelle die dritte Emitterspalte, an einer vierten Triggerstelle die vierte Emitterspalte, an einer fünften Triggerstelle die erste Emitterspalte, an einer sechsten Triggerstelle die zweite Emitterspalte usw. aktiviert werden. Das Verfahren nach Anspruch 7 ist insbesondere für Emitteranordnungen geeignet, bei denen der Abstand zwischen der ersten und der letzten Emitterspalte und somit die Breite der Emitteranordnung klein gegenüber dem Durchmesser der Bezugskreislinie ist.

Zweckmäßigerweise werden die Emitterspalten der Emitteranordnung symmetrisch zu einer Radialebene angeordnet, die durch die Drehachse und eine Normale auf die Drehachse aufgespannt wird, derart, dass die Emitterspalten parallel zu dieser Radialebene verlaufen. Wenn die Emitteranordnung eine ungerade Anzahl von Emitterspalten hat, ist die Anordnung der Emitterspalten bevorzugt so, dass die mittlere Emitterspalte oder deren gerade Verlängerung durch die Drehachse verläuft. Wenn die Druckkopfanordnung eine gerade Anzahl von Emitterspalten hat, ist die Drehachse bevorzugt mittig zwischen den beiden innersten Emitterspalten bzw. deren geraden Verlängerungen angeordnet.

Bei einer Weiterbildung der Erfindung werden zum Bedrucken von konzentrisch zur Drehachse angeordneten, jeweils durch eine inneren und eine äußere Kreisbahn begrenzten Druckringen zumindest eine erste und eine zweite Emitteranordnung bereitgestellt, wobei diese Emitteranordnungen derart relativ zu der Drehachse positioniert werden, dass sich der arithmetische Mittelwert der inneren und der äußeren Kreisbahn der ersten Emitteranordnung vom arithmetischen Mittelwert der inneren und der äußeren Kreisbahn der zweiten Emitteranordnung unterscheidet, wobei zum Erzeugen des Triggersignals der ersten Emitteranordnung eine Bezugskreislinie mit einem ersten Radius und zum Erzeugen des Triggersignals der zweiten Emitteranordnung eine Bezugskreislinie mit einem zweiten, vom ersten Radius abweichenden Radius verwendet wird, und wobei der erste Radius nach einem der Ansprüche 1 bis 5 in Abhängigkeit vom ersten und zweiten radialen Abstand der ersten Emitteranordnung und der zweite Radius nach einem der Ansprüche 1 bis 5 in Abhängigkeit vom ersten und zweiten radialen Abstand der zweiten Emitteranordnung gewählt wird. In vorteilhafter Weise ist dabei die Bezugskreislinie jeder Emitteranordnung jeweils innerhalb des der Emitteranordnung zugeordneten Druckrings mit Abstand zu dessen innerem und äußerem Rand angeordnet. Hierkönnen die maximal beim Drucken auftretenden Verzerrungen weiter reduziert werden. Bevorzugt grenzen zueinander benachbart angeordnete Druckringe derart aneinander an oder überdecken sich etwas, dass in radialer Richtung eine lückenlose Bedruckung der Unterlage bzw. einer drauf befindlichen verfestigten Materialschicht möglich ist.

Bei einer bevorzugten Ausführungsform der Erfindung werden mindestens zwei Emitteranordnungen bereitgestellt, die bezüglich der Drehachse um einen Drehwinkel zueinander versetzt sind, wobei die Emitter der einzelnen Emitteranordnungen jeweils zum Auftragen von Materialportionen nach mindestens einem der Ansprüche 1 bis 8 gesteuert werden. Diese ermöglicht einen schnelleren Materialauftrag und/oder eine höhere Druckauflösung.

Bei einer vorteilhaften Ausgestaltung der Erfindung sind die Mittelpunkte von innerhalb der Emitterspalten zueinander benachbarten Emitter in einem konstanten ersten Rasterstabstand zueinander angeordnet, wobei zueinander benachbarte Emitterspalten jeweils in einem konstanten zweiten Rasterstabstand zueinander versetzt sind, und wobei der erste Rasterabstand um weniger als 20 Prozent, insbesondere um weniger als 10 Prozent vom zweiten Rasterabstand abweicht und insbesondere mit diesem übereinstimmt. Hierdurch lassen sich die Verzerrungen beim Drucken weiter reduzieren.

Mit dem erfindungsgemäßen Verfahren können dreidimensionale Formgegenstände hergestellt werden. Hierzu werden bei dem Verfahren, bei dem das Material mit Hilfe von Düsen aufgetragen wird, eine Vielzahl von Festkörperschichten des düsengängigen Materials übereinander aufgetragen. Nach jedem Auftragen einer Materialschicht wird diese jeweils verfestigt bevor eine weitere Materialschicht aufgetragen wird. Wenn das Material ein vernetzbarer Polymerwerkstoff ist, kann das Verfestigen des Materials beispielsweise dadurch erreicht werden, dass es mit UV-Licht einer geeigneten Wellenlänge bestrahlt wird. Der Abstand zwischen der Emitteranordnung und der Unterlage wird jeweils von Schicht zu Schicht um die Dicke der zuletzt aufgetragenen Materialschicht vergrößert. Bei dem Verfahren nach Patentanspruch 2 werden zu Herstellen eines dreidimensionalen Formgegenstands mehrere Materialschichten des flüssigen, pastösen oder pulverförmigen Materials übereinander durch Bestrahlen mit der Emitteranordnung vollflächig und/oder bereichsweise verfestigt.

Nachfolgend sind Ausführungsbeispiele der Erfindung anhand der Zeichnung näher erläutert. Es zeigt:
- Fig. 1: eine Vorrichtung zum Herstellen dreidimensionaler Formgegenstände durch schichtweisen Materialauftrag, die eine als Drehteller ausgestaltete Unterlage aufweist, auf die eine Anzahl von Materialschichten für die Formgegenstände aufgebracht sind,
- Fig. 2: eine Darstellung ähnlich Fig. 1, nachdem weitere Materialschichten aufgebracht wurden und die Unterlage gegenüber Fig. 1 abgesenkt wurde,
- Fig. 3: eine Teilaufsicht auf die Unterlage und eine über dieser angeordnete Emitteranordnung mit kartesisch in mehreren Spalten angeordneten Emittern (Düsen) zur Abgabe von Materialportionen eines düsengängigen Materials auf die Unterlage, wobei die Lage der Emitter schematisch durch Kreise markiert ist,
- Fig. 4: eine grafische Darstellung einer kartesischen Druckpunktmatrix,
- Fig. 5: Aktivierungsdaten für eine erste Triggerstelle,
- Fig. 6: eine Darstellung ähnlich Fig. 3, wobei sich die Unterlage an der ersten Triggerstelle befindet, an der eine erste Emitterspalte Materialportionen auf die Unterlage abgibt, um eine unterbrochene Linie zu erzeugen, wobei die Materialportionen schraffiert sind,
- Fig. 7: Aktivierungsdaten für eine zweite Triggerstelle,
- Fig. 8: eine Darstellung ähnlich Fig. 3, wobei sich die Unterlage in der zweiten Triggerstelle befindet, an der eine zweite Emitterspalte weitere Materialportionen auf die Unterlage abgibt, um die unterbrochene Linie zu erzeugen,
- Fig. 9: Aktivierungsdaten für eine dritte Triggerstelle,
- Fig. 10: eine Darstellung ähnlich Fig. 3, wobei sich die Unterlage in der dritten Triggerstelle befindet, an der eine dritte Emitterspalte Materialportionen auf die Unterlage abgibt,
- Fig. 11A: Materialportionen, die gemäß dem in Fig. 5 bis 10 gezeigten Ausführungsbeispiel der Erfindung entlang einer unterbrochenen Linie auf die Unterlage aufgebrachte wurden, wobei die Materialportionen durch vollflächige Kreise und Stellen, an denen im Bereich einer Unterbrechung der Linie kein Material aufgebracht wurde, durch strichlinierte Kreise markiert sind,
- Fig. 11B: eine Darstellung ähnlich Fig. 11A, wobei jedoch die Materialportionen nicht erfindungsgemäß auf die Unterlage aufgebracht wurden,
- Fig. 12: eine Teilaufsicht auf die Unterlage und daran angeordnete Emitteranordnung, wobei Triggerstellen, an denen die Emitterspalten beim Drucken der in Fig. 10B gezeigten, nicht erfindungsgemäß hergestellten Linie Material auf die Unterlage abgegeben haben, am oberen Rand der Zeichnung durch Pfeile markiert sind,
- Fig. 13 und 14: eine Teilaufsicht auf die Unterlage einer Vorrichtung zum schichtweisen Herstellen dreidimensionaler Formgegenstände, wobei die Unterlage mehrere Emitteranordnungen aufweist, die unterschiedlichen Druckringen zugeordnet sind,
- Fig. 15 und 16: Ansichten auf die Emitter verschiedener Druckköpfe,
- Fig. 17: eine Vorrichtung zum Herstellen dreidimensionaler Formgegenstände nach dem Stereolithographie-Vorbild, wobei die Vorrichtung einen Behälter hat, in dem eine drehbare Unterlage und ein durch Bestrahlung mit einer elektromagnetischen Strahlung verfestigbares Material angeordnet sind,
- Fig. 18: einen Längsschnitt durch die Drehachse der in Fig. 17 gezeigten Vorrichtung, und
- Fig. 19: eine Darstellung ähnlich Fig. 18, nachdem weitere Materialschichten verfestigt wurden und der Behälter gegenüber Fig. 18 abgesenkt wurde.

Bei einem Verfahren zum schichtweisen Aufbringen von düsengängigem Material auf eine in einer Horizontalebene angeordnete Unterlage 1 wird ein die Unterlage 1 aufweisender kreisringförmiger Drehteller bereitgestellt, der um eine vertikale Drehachse 2 an einer ortsfesten Halterung 3 verdrehbar gelagert ist. Die Halterung 3 hat an ihrer Unterseite eine Standfläche, mittels der sie beispielsweise auf einer Tischplatte oder auf dem Boden eines Raums aufstellbar ist.

Die Unterlage 1 steht mit einer ersten Positioniereinrichtung in Antriebsverbindung, die einen ersten Antriebsmotor 4 hat, mittels welchem die Unterlage 1 in Richtung des Pfeils 5 drehantreibbar und entsprechend einem von einer Ansteuereinrichtung 6 bereitgestellten Drehlagen-Sollwertsignal positionierbar ist. Der erste Antriebsmotor 5 ist zu diesem Zweck mit einem in die Ansteuereinrichtung 6 integrierten ersten Lageregler verbunden, der einen Encoder 7 zur Erfassung eines Drehlagesignals für die Unterlage 1 aufweist. Mit Hilfe der ersten Positioniereinrichtung kann die Unterlage 1 kontinuierlich und ohne anzuhalten über nahezu beliebige Winkel von mehr als 360° relativ zur Halterung 3 um die Drehachse 2 gedreht werden.

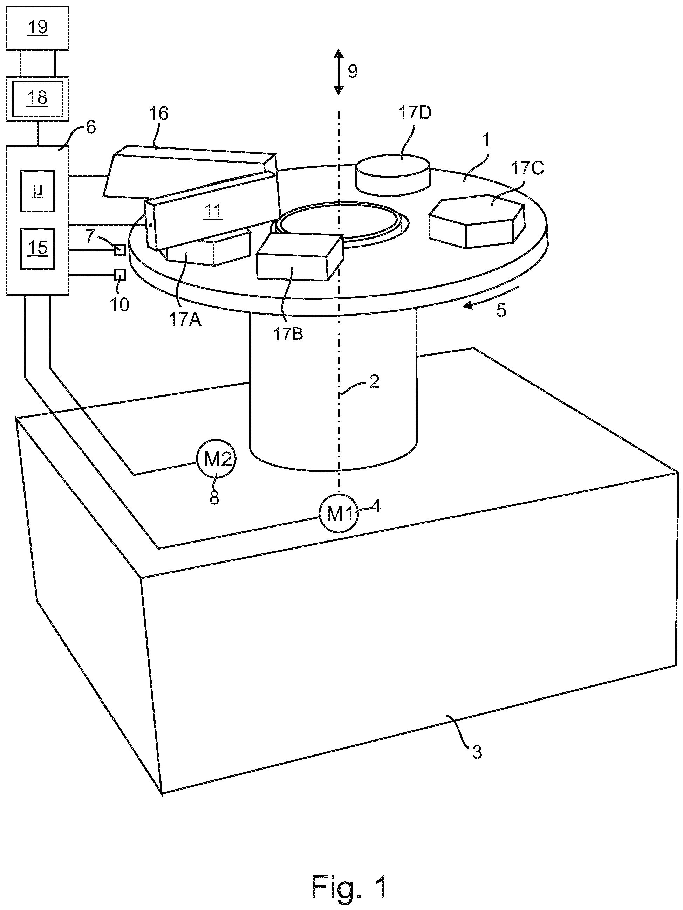

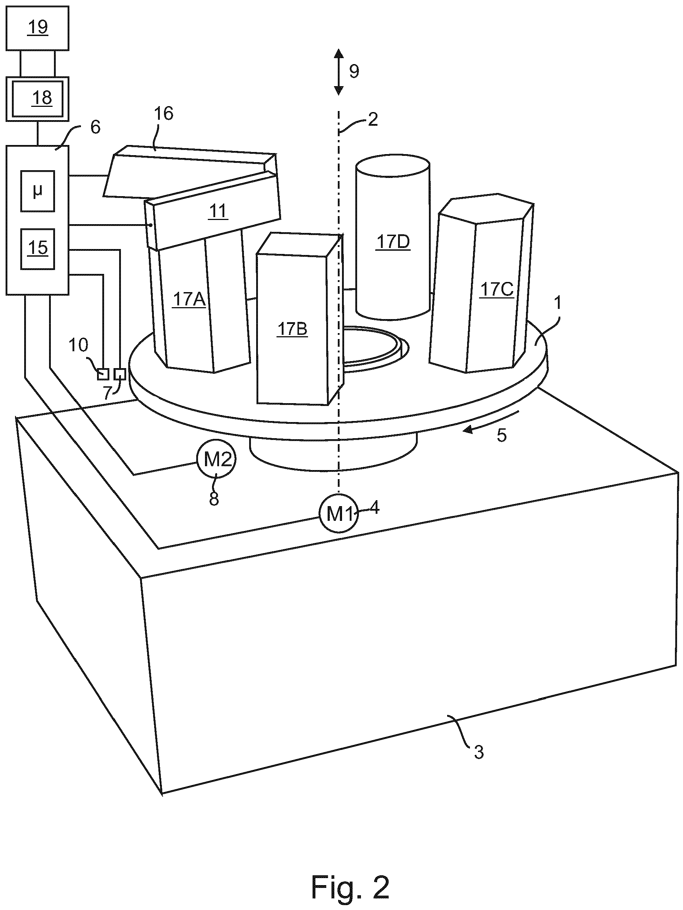

Die Unterlage 1 steht außerdem mit einer zweiten Positioniereinrichtung in Antriebsverbindung, die einen zweiten Antriebsmotor 8 hat, mittels welchem die Unterlage 3 in Richtung des Doppelpfeils 9 relativ zu der Halterung 3 auf- und ab verschiebbar und entsprechend einem von der Ansteuereinrichtung 6 bereitgestellten Höhenlagen-Sollwertsignal positionierbar ist (Fig. 1 und 2). Die Positionierung kann schrittweise oder kontinuierlich erfolgen. Der zweite Antriebsmotor 10 ist zu diesem Zweck mit einem in die Ansteuereinrichtung 6 integrierten zweiten Lageregler verbunden, der einen Lagesensor 10 zur Erfassung der Höhenlage der Unterlage 1 aufweist.

Zur Durchführung des Verfahrens wird außerdem eine Emitteranordnung 11 bereitgestellt, die als handelsüblicher Druckkopf ausgestaltet ist, der eine Vielzahl von mit steuerbaren Ventilen oder Pumpen versehenen, als Düsen ausgestaltete Emitter 12 hat, aus denen jeweils Materialportionen (z.B. Tröpfchen) eines düsengängigen, härtbaren Materials abgebbar sind. Anstelle eines handelsüblichen Druckkopfs kann auch eine andere Emittermatrix mit feststehenden Emittern verwendet werden. Das Material kann beispielsweise ein foto- und/oder elektromagnetisch und/oder chemisch vernetzbares Polymer sein, das in einem in der Zeichnung nicht näher dargestellten Reservoir bevorratet ist, welches über Leitungen mit den Emittern 12 verbunden ist.

Die Emitter 12 sind über der Unterlage 3 in einer parallel zu der Ebene der Unterlage 1 verlaufenden, von dieser beabstandeten Ebene angeordnet und kartesisch in mehreren parallel zueinander angeordnete Emitterspalten 13A, 13B, 13C und quer dazu verlaufenden Emitterzeilen relativ zueinander positioniert. In den Emitterspalten 13A, 13B, 13C sind die Mittelpunkte der einzelnen Emitter 12 bzw. die Flächenschwerpunkte deren Düsenöffnungen entlang gerader Linien 14A, 14B, 14C in konstanten Abständen zueinander versetzt.

Die Emitteranordnung 11 ist mit einem Druckpuffer 15 verbunden, in dem für jeder Emitter der Emitteranordnung 11 jeweils ein Aktivierungssignal zwischengespeichert werden kann. Das Aktivierungssignal kann beispielsweise den logischen Wert "1" oder den logischen Wert "0" haben.

Außerdem hat die Emitteranordnung 11 einen Triggereingang, an den ein Triggersignal angelegt werden kann. Bei jedem Trigger, der am Triggereingang empfangen wird, geben alle Emitter 12 der Emitteranordnung 11, für die im Druckerpuffer 15 jeweils der Wert "1" abgelegt ist, eine Materialportion ab. Emitter 12, für die im Druckerpuffer der Wert "0" abgelegt ist, werden beim Empfangen eines Triggers nicht betätigt, d.h. diese Emitter 12 geben keine Materialportion ab.

Zum Verfestigen bzw. zum Vernetzen einer auf die Unterlage 1, einer darauf befindlichen Materialschicht und/oder einen auf der Unterlage 1 befindlichen Schichtstapel mit mehreren mittels der Emitteranordnung 11 aufgebrachten Materialschicht wird eine UV-Lichtquelle 16 bereitgestellt, die so an der Unterlage 1 positioniert wird, dass sie mit ihrer Abstrahlseite der Unterlage 1 zugewandt ist.

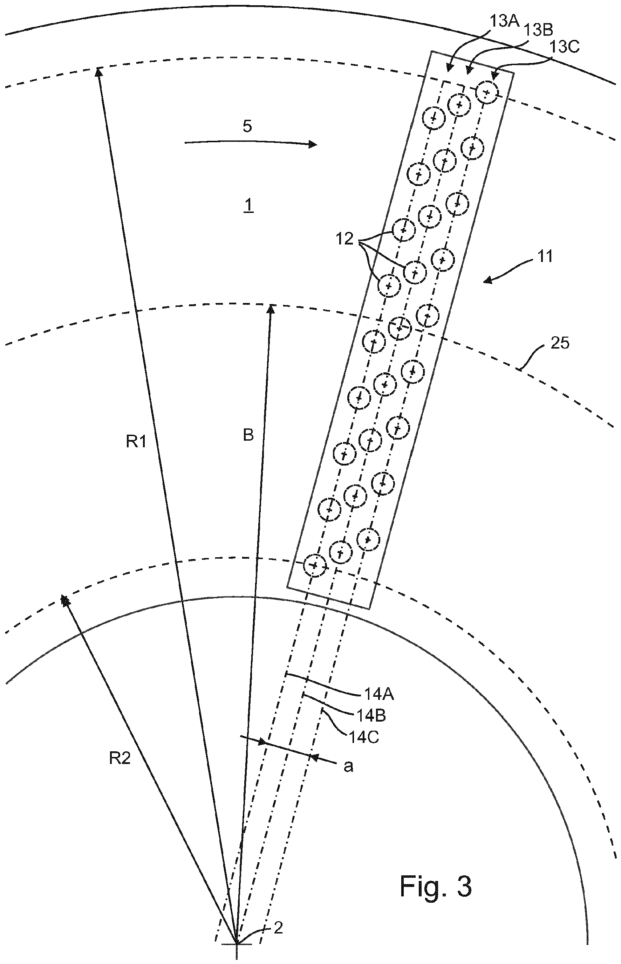

Bei dem Ausführungsbeispiel gemäß den Fig. 3, 6, 8 und 10 hat die Emitteranordnung 11 drei Emitterspalten 13A, 13B, 13C, die in konstanten Abständen zueinander angeordnet sind und parallel zueinander verlaufen. Die gerade Verlängerung der die Mittelpunkte der Emitter 12 der mittleren Emitterspalte 13B miteinander verbindenden Linie 14B verläuft durch die Drehachse 2. Die geraden Verlängerungen der die Mittelpunkte der Emitter 12 der beiden anderen Emitterspalten 13A, 13C miteinander verbindenden Linien 14A, 14C sind um das Maß, um das die Linien 14A, 14B bzw. 14B, 14C rechtwinklig zu ihrer Erstreckungsrichtung zueinander versetzt sind, von der Drehachse 2 beabstandet.

In Fig. 3 ist die Emitteranordnung 11 vergrößert dargestellt. Der Abstand a zwischen der die Mittelpunkte der Emitter 12 der ersten Emitterspalten 13A miteinander verbindenden Linie 14A und der die Mittelpunkte der Emitter 12 der letzten Emitterspalte 13C miteinander verbindenden Linien 14A kann etwa zwischen 20 µm und 100 µm betragen.

Mit Hilfe der die Unterlage 1, die Emitteranordnung 2, die Ansteuereinrichtung 6 und die UV-Lichtquelle 16 aufweisenden Vorrichtung, können durch schichtweises Auftragen und Verfestigen einer Vielzahl von Materialschichten des düsengängigen Materials dreidimensionale Formgegenstände 17A, 17B, 17C, 17D auf der Unterlage 3 hergestellt werden.

Die Ansteuereinrichtung 6 ist mit einem übergeordneten Computer 18, wie zum Beispiel einem PC, verbunden, der einen Speicher 19 aufweist, in dem für die einzelnen Materialschichten Geometriedaten als Druckpunkte abgelegt sind, entsprechend denen die Materialschichten der Formgegenstände 17A, 17B, 17C, 17D hergestellt werden. Die Druckpunkte sind in einer polaren Matrix angeordnet, die radial zur Drehachse verlaufende Reihen aufweist, in denen jeweils mehrere Druckpunkte zueinander versetzt sind. Die Druck- bzw. Geometriedaten können beispielsweise mittels einer CAD-Software bereitgestellt werden, die auf dem Computer 18 ablaufbar ist. Auf dem Computer 18 ist ferner eine Software ausführbar, welche die Geometriedaten für die einzelnen Schichten der Formgegenstände 2A, 2B, 2C, 2D generiert. Zum Laden von mit Hilfe der Geometriedaten erzeugter Druckdaten in den Druckpuffer 14 ist der Computer 18 mit der Ansteuereinrichtung 6 verbunden.

Wie in Fig. 3 zu sehen ist, weist der Mittelpunkt des am weitesten von der Drehachse 2 entfernten Emitters 12 der Emitterordnung 11 einen ersten radialen Abstand R1 zur Drehachse 2 und der Mittelpunkt des am dichtesten an der Drehachse 2 angeordneten Emitters 12 einen zweiten radialen Abstand R2 zur Drehachse 2 auf. Der Mittelpunkt des am weitesten von der Drehachse 2 entfernten Emitters 12 liegt auf einer zur Drehachse 2 konzentrischen Kreislinie mit dem Radius R1. Der Mittelpunkt des dichtesten an der Drehachse 2 angeordneten Emitters 12 liegt auf einer zur Drehachse 2 konzentrischen Kreislinie mit dem Radius R2.

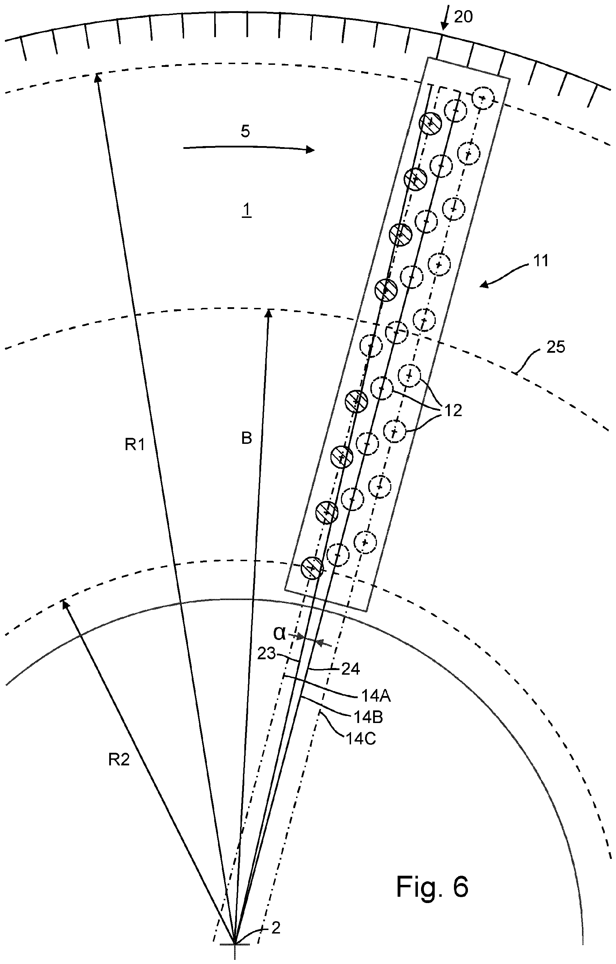

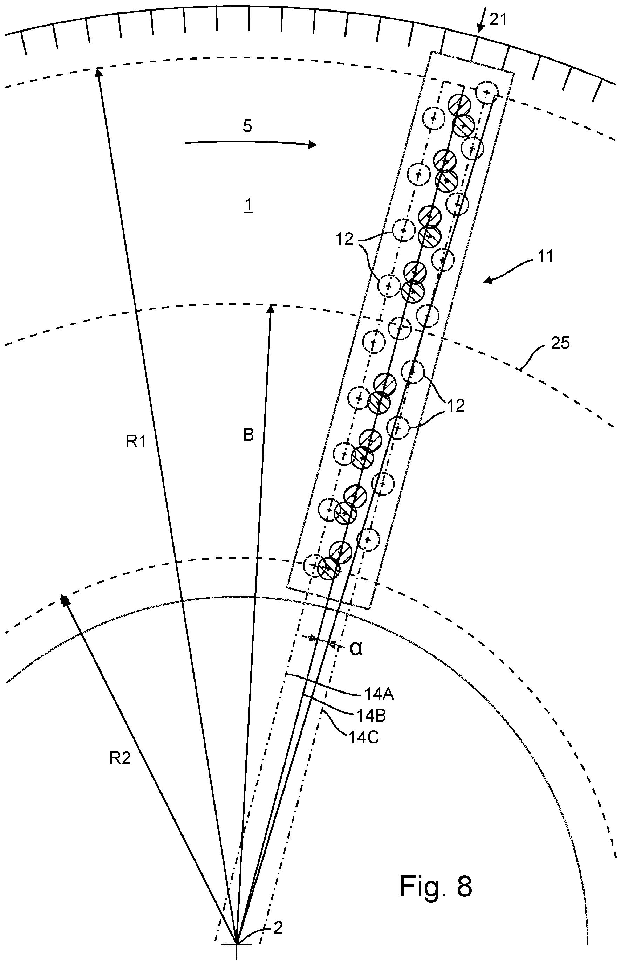

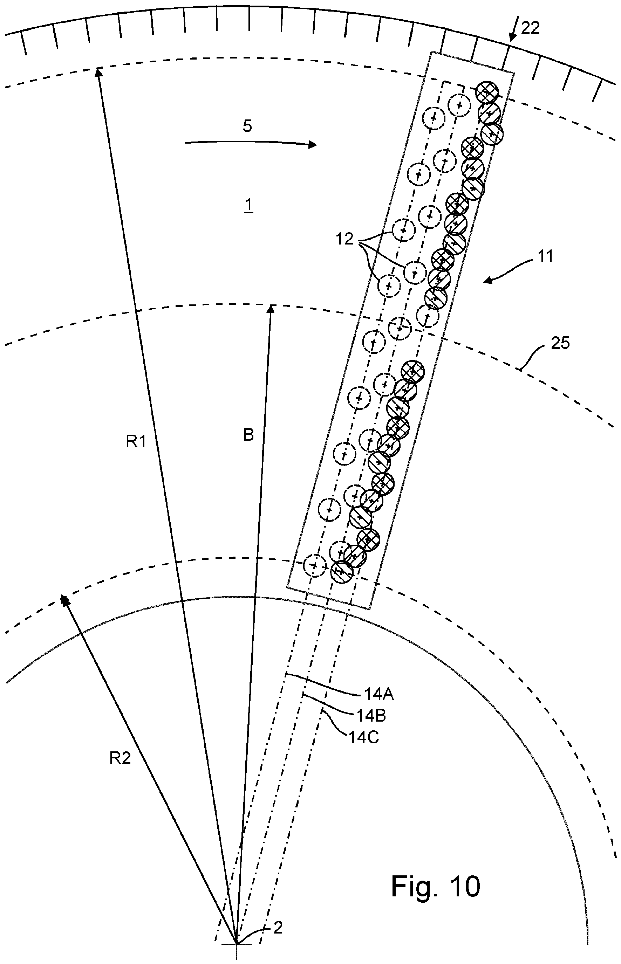

Nachstehend wird der Ablauf des Verfahrens anhand von Fig. 3 und 5 bis 10 erläutert. Die Unterlage wird in Richtung des Pfeils 5 um die Drehachse 2 gedreht und es wird ein Triggersignal erzeugt, das Triggerstellen für die Drehlage der Emitteranordnung 11 relativ zur Unterlage 1 definiert. In Umfangsrichtung zueinander benachbarte Triggerstellen sind um einen konstanten Winkel α um die Drehachse 2 zueinander versetzt. Der Winkel α entspricht dem Winkel, den eine erste Radiallinie 23 und eine zweite Radiallinie 24 zwischen sich einschließen. Die erste Radiallinie 23 verläuft von der Drehachse 2 zum Schnittpunkt der Linie 14A, auf der die Mittelpunkte der Emitter 12 einer ersten Emitterspalte 13A liegen, und einer zu der Drehachse 2 konzentrischen Bezugskreislinie 25, deren Radius B dem arithmetischen Mittelwert aus dem ersten radialen Abstand R1 und dem zweiten radialen Abstand R2 entspricht. Die zweite Radiallinie 24 verläuft von der Drehachse 2 zum Schnittpunkt der Linie 14B, auf der die Mittelpunkte der Emitter 12 einer zweiten Emitterspalte 13B liegen, und einer der Bezugskreislinie 25. Eine erste Triggerstelle ist in Fig. 6 durch den Pfeil 20, eine zweite Triggerstelle ist in Fig. 8 durch den Pfeil 21 und eine dritte Triggerstelle ist in Fig. 10 durch den Pfeil 22 markiert.

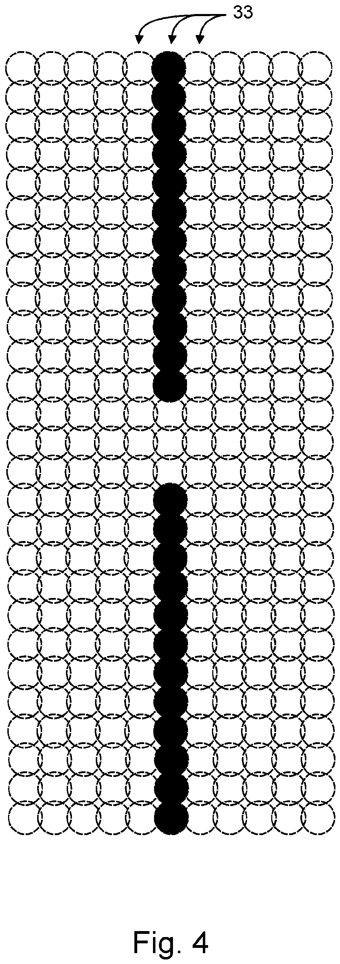

Im Speicher 19 sind Druck- bzw. Geometriedaten für eine zu druckende gerade Materiallinie abgespeichert, die in Längsrichtung etwa mittig eine Unterbrechung aufweist. Den Druck- bzw. Geometriedaten sind Druckpunkte zugeordnet, die in Fig. 4 grafisch dargestellt sind. Deutlich ist erkennbar, dass die Druckpunkte in einer kartesischen Matrix angeordnet sind, die parallel zueinander versetzte Reihen 33 aufweist, in denen jeweils mehrere Druckpunkte in konstanten Abständen zueinander versetzt sind. Druckpunkte, an denen die Festkörperschicht sein soll, sind in Fig. 4 als vollflächige Kreise und Druckpunkte, an denen die Festkörperschicht nicht sein soll, als Kreislinien dargestellt. Bevor die Druckpunkte gedruckt werden, werden die Geometriedaten zunächst in eine polare Matrix transformiert, bei der die Druckpunkte in radial zur Drehachse 2 verlaufenden Reihen zueinander versetzt sind. Zueinander benachbarte Reihen der polaren Matrix sind jeweils im Winkelabstand der Triggerstellen 21, 22, 23 zueinander versetzt.

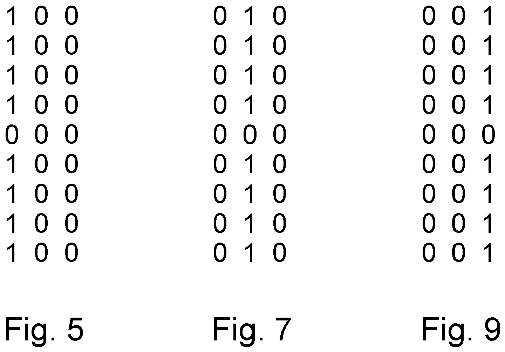

Bevor die Unterlage 1 die erste Triggerstelle erreicht, wird für jeden Emitter 12 der Emitteranordnung 11 jeweils ein erstes Aktivierungssignal im Druckpuffer 15 abgelegt. Für die einzelnen Emitter 12 der ersten Emitterspalte 13A der Emitteranordnung 11 wird jeweils in Abhängigkeit von den im Speicher 19 abgelegten Geometriedaten und in Abhängigkeit von der Position, an der der betreffende Emitter 12 relativ zur Unterlage 1 angeordnet ist, wenn die Unterlage 1 an der ersten Triggerstelle positioniert ist, das erste Aktivierungssignal mit Hilfe der Ansteuereinrichtung 6 ermittelt und im Druckpuffer 15 zwischengespeichert. Wenn der betreffende Emitter 12 Material auf die Unterlage 1 abgeben soll, wird für den Emitter 12 der logische Wert "1" im Druckpuffer abgelegt, anderenfalls der Wert "0". Die Aktivierungssignale der Emitter 12 der zweiten und dritten Emitterspalte 13B, 13C werden auf den logischen Wert "0" gesetzt. Dieser wird jeweils im Druckpuffer 15 abgelegt (Fig. 5). Sobald die Unterlage 1 an der durch den Pfeil 20 markierten ersten Triggerstelle positioniert ist, wird die Emitteranordnung 11 getriggert. Beim Empfangen des Triggers geben alle Emitter 12, für die im Druckpuffer der Wert "1" abgelegt ist, jeweils eine Materialportion auf die sich drehende Unterlage 1 ab. Die Materialportionen sind in Fig. 6 schraffiert dargestellt. Emitter, für die im Druckpuffer der Wert "0" abgelegt ist, geben kein Material ab.

Bevor die Unterlage 1 die durch den Pfeil 21 markierte zweite Triggerstelle erreicht (Fig. 8), wird in einem weiteren Schritt ein zweites Aktivierungssignal im Druckpuffer 15 abgelegt. Für die einzelnen Emitter 12 einer zweiten Emitterspalte 13B wird jeweils in Abhängigkeit von den im Speicher 19 abgelegten Geometriedaten und in Abhängigkeit von der Position, an der der betreffende Emitter 12 relativ zur Unterlage 1 angeordnet ist, wenn die Unterlage 1 an der zweiten Triggerstelle positioniert ist, das zweite Aktivierungssignal mit Hilfe der Ansteuereinrichtung 6 ermittelt und im Druckpuffer 15 zwischengespeichert. Die Aktivierungssignale der Emitter 12 der ersten und dritten Emitterspalte 13A, 13C werden auf den logischen Wert "0" gesetzt. Dieser wird jeweils im Druckpuffer 15 abgelegt (Fig. 7). Sobald die Unterlage 1 an der zweiten Triggerstelle positioniert ist, wird die Emitteranordnung 11 getriggert, d.h. es werden alle Emitter 12 abgefeuert, für die im Druckpuffer der Wert "1" abgelegt ist.

Bevor die Unterlage 1 die durch den Pfeil 22 markierte dritte Triggerstelle erreicht (Fig. 10), wird in einem weiteren Schritt ein drittes Aktivierungssignal im Druckpuffer 15 abgelegt. Für die einzelnen Emitter 12 der dritten Emitterspalte 13C wird jeweils in Abhängigkeit von den im Speicher 19 abgelegten Geometriedaten und in Abhängigkeit von der Position, an der der betreffende Emitter 12 relativ zur Unterlage 1 angeordnet ist, wenn die Unterlage 1 an der dritten Triggerstelle positioniert ist, das dritte Aktivierungssignal mit Hilfe der Ansteuereinrichtung 6 ermittelt und im Druckpuffer 15 zwischengespeichert. Die Aktivierungssignale der Emitter 12 der ersten und zweiten Emitterspalte 13A, 13B werden auf den logischen Wert "0" gesetzt. Dieser wird jeweils im Druckpuffer 15 abgelegt (Fig. 9). Sobald die Unterlage 1 an der dritten Triggerstelle positioniert ist, wird die Emitteranordnung 11 erneut getriggert, d.h. es werden alle Emitter abgefeuert, für die im Druckpuffer der Wert "1" abgelegt ist.

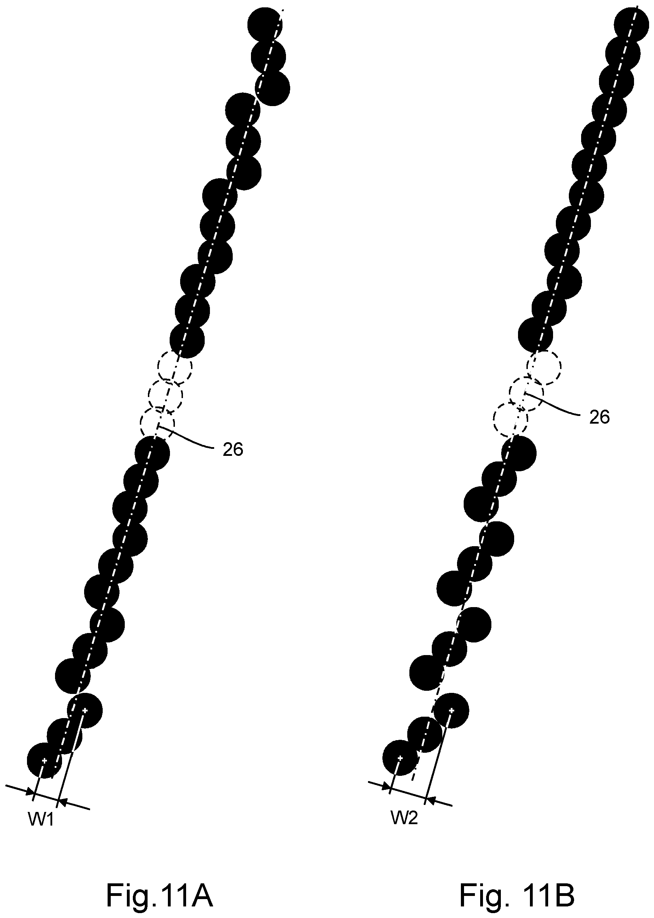

In Fig. 11A ist die bei dem vorstehend beschriebenen Ausführungsbeispiel erzeugte, unterbrochene Linie dargestellt. Die vollflächigen schwarzen Kreise markieren die Stellen, an denen zum Drucken der Linie Materialportionen auf die Unterlage 1 abgegeben wurden. Stellen, an denen im Bereich der Unterbrechung kein Material auf die Unterlage 1 aufgebracht wurde, sind durch strichlinierte Kreise markiert. Die strichpunktierte Solllinie 26 markiert die durch die Geometriedaten vorgegebene Sollposition der Mittellinie der zu drückenden unterbrochenen Linie.

Wenn im Speicher 19 Geometriedaten für eine unterbrechungsfreie, durchgezogene Linie abgelegt werden, werden an jeder Triggerstelle jeweils alle Emitter 12 der der betreffenden Triggerstelle zugeordneten Emitterspalte *** abgefeuert. In diesem Fall werden außer an den durch die vollflächigen schwarzen Kreise markierten Stellen auch an den durch die strichlinierten Kreise markierten Stellen Materialportionen auf die Unterlage 1 abgegeben.

Wie in Fig. 11A zu sehen ist, liegen die Mittelpunkte der Materialportionen, die von den Emittern 12 abgegeben werden, die in Erstreckungsrichtung der Emitteranordnung 11 etwa in der Mitte der Emitteranordnung 11 liegen, entweder auf der Solllinie 26 oder haben nur einen sehr geringen Abstand zu dieser. Mit zunehmendem Abstand von der Mitte nehmen die Abweichungen jeweils zum äußeren und inneren Rand des Druckbereichs hin zu. Die größten Abweichungen treten am äußeren und inneren Rand des Druckbereichs auf.

In Fig. 11B ist das Druckbild dargestellt, das sich ergibt, wenn die im Speicher 12 abgelegte unterbrochene Linie mit einem nicht erfindungsgemäßen Verfahren gedruckt wird, das sich von dem erfindungsgemäßen Verfahren dadurch unterscheidet, dass der Radius der zur Drehachse 2 konzentrischen Bezugskreislinie dem ersten radialen Abstand R1 entspricht. In Umfangsrichtung zueinander benachbarte Triggerstellen 28 sind um einen konstanten Winkel β um die Drehachse 2 zueinander versetzt, der kleiner ist als der Winkel α aus Fig. 6. In diesem Fall liegen die Mittelpunkte der Materialportionen, die von den Emittern 12 abgegeben werden, die in den betreffenden Emitterspalten 13A, 13B, 13C am weitesten von der Drehachse 2 entfernt liegen, entweder auf der Solllinie 26 oder haben nur einen Abstand zu dieser. Vom äußeren zum inneren Rand des Druckbereichs werden die Abweichungen größer. Die größten Abweichungen treten am inneren Rand des Druckbereichs auf. Durch einen Vergleich von Fig. 11A mit Fig. 11B wird deutlich, dass die maximale Breite w2 der gedruckten Linie in Fig. 11B aufgrund der höheren Abweichungen größer ist als die maximale Breite w1 der gedruckten Linie gemäß dem Ausführungsbeispiel in Fig. 11A. Die Breiten w1 und w2 beziehen sich jeweils auf die Mittelpunkte der auf die Unterlage 1 abgegebenen, verfestigten Materialportionen.

Ein Vergleich von Fig. 11A mit Fig. 11B zeigt, dass die Abweichungen der auf die Unterlage 1 abgegebenen Materialportionen von der Solllinie 26 in Fig. 11B ungleichmäßiger entlang der gedruckten Linie verteilt sind als bei der nach dem erfindungsgemäßen Verfahren gedruckten Linie gemäß in Fig. 11A. Auch sind die Maximalwerte der Abweichungen in Fig. 11B größer als in Fig. 11A.

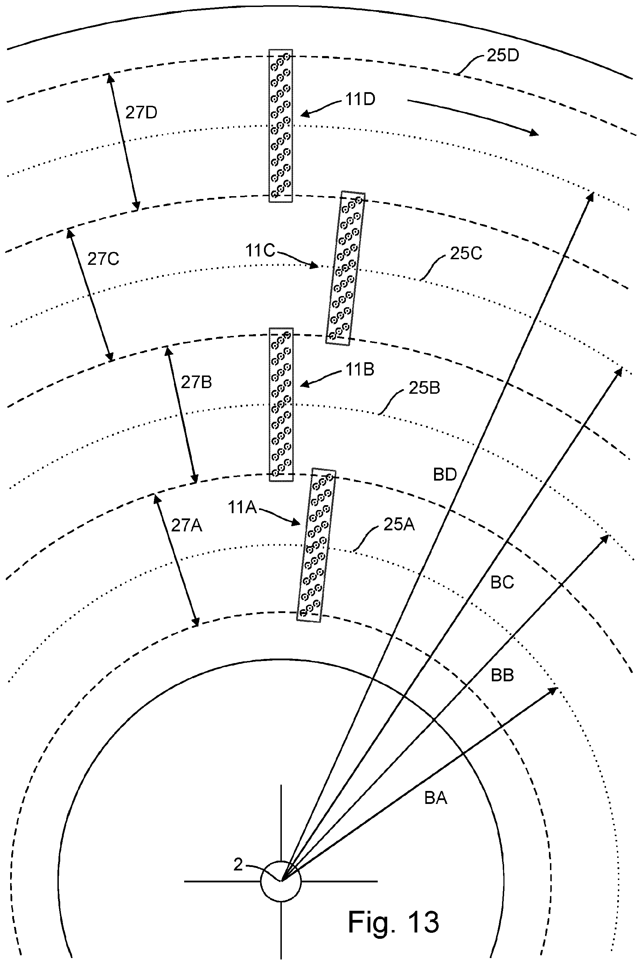

Bei dem in Fig. 13 abgebildeten Ausführungsbeispiel werden zum Bedrucken von konzentrisch zur Drehachse angeordneten, jeweils durch eine innere und eine äußere Kreisbahn begrenzten Druckringen 27A, 27B, 27C, 27D mehrere Emitteranordnungen 11A, 11B, 11C, 11D bereitgestellt. Die Emitteranordnungen 11A, 11B, 11C, 11D werden jeweils mit ihrer Längsmittelachse radial zur Drehachse 2 ausgerichtet und derart angeordnet, dass die Abstände, welche die Emitteranordnungen 11A, 11B, 11C, 11D zur Drehachse 2 haben, unterschiedlich sind. Wie in Fig. 13 zu sehen ist, werden in radialer Richtung zueinander benachbarte Emitteranordnungen 11A, 11B, 11C, 11D jeweils so angeordnet, dass die ihnen zugeordneten Druckringe aneinander angrenzen, so dass sich in radialer Richtung ein durchgehender Druckbereich ergibt, der sich von der inneren Kreisbahn des Druckrings 27A zur äußeren Kreisbahn des Druckrings 27D erstreckt.

Jeder Emitteranordnung 11A, 11B, 11C, 11D ist jeweils eine eigene, konzentrisch zur Drehachse 2 angeordnete Bezugskreislinie 25A, 25B, 25C, 25D zugeordnet, deren Radius BA, BB, BC, BD dem arithmetischen Mittelwert aus dem ersten radialen Abstand zwischen dem Mittelpunkt des am weitesten von der Drehachse 2 entfernten Emitters 12 der betreffenden Emitteranordnung 11A, 11B, 11C, 11D und der Drehachse 2 und dem zweiten radialen Abstand zwischen dem Mittelpunkt des am dichtesten an der Drehachse 2 angeordneten Emitters 12 der betreffenden Emitteranordnung 11A, 11B, 11C, 11D und der Drehachse 2 entspricht.

Für jede Emitteranordnung 11A, 11B, 11C, 11D wird jeweils ein Aktivierungssignal erzeugt und zwischengespeichert. Außerdem wird für jede Emitteranordnung 11A, 11B, 11C, 11D jeweils ein Triggersignal erzeugt, das Triggerstellen für die Drehlage zwischen der betreffenden Emitteranordnung 11A, 11B, 11C, 11D und der Unterlage 1 definiert.

Der Winkel zwischen zueinander benachbarten Triggerstellen der einzelnen Emitteranordnungen 11A, 11B, 11C, 11D entspricht jeweils dem Winkel, den eine der betreffenden Emitteranordnung 11A, 11B, 11C, 11D zugeordnete erste Radiallinie und eine der betreffenden Emitteranordnung 11A, 11B, 11C, 11D zugeordnete zweite Radiallinie zwischen sich einschließen.

Die erste Radiallinie verläuft von der Drehachse 2 zum Schnittpunkt zwischen einer ersten Emitterspalte der betreffenden Emitteranordnung 11A, 11B, 11C, 11D und der der Emitteranordnung 11A, 11B, 11C, 11D zugeordneten Bezugskreislinie BA, BB, BC, BD. Die zweite Radiallinie verläuft von der Drehachse 2 zum Schnittpunkt zwischen einer zu der ersten Emitterspalte in Umfangsrichtung der Drehachse 2 benachbarten zweiten Emitterspalte der betreffenden Emitteranordnung 11A, 11B, 11C, 11D und der Bezugskreislinie BA, BB, BC, BD der Emitteranordnung 11A, 11B, 11C, 11D.

An den den einzelnen Emitteranordnungen 11A, 11B, 11C, 11D zugeordneten Triggerstellen werden die Emitter 12 der betreffenden Emitteranordnung 11A, 11B, 11C, 11D jeweils derart angesteuert, dass nur diejenigen Emitter 12 Material abgeben, bei denen das zuvor zwischengespeicherte Aktivierungssignal der betreffenden Emitteranordnung 11A, 11B, 11C, 11D gesetzt ist.

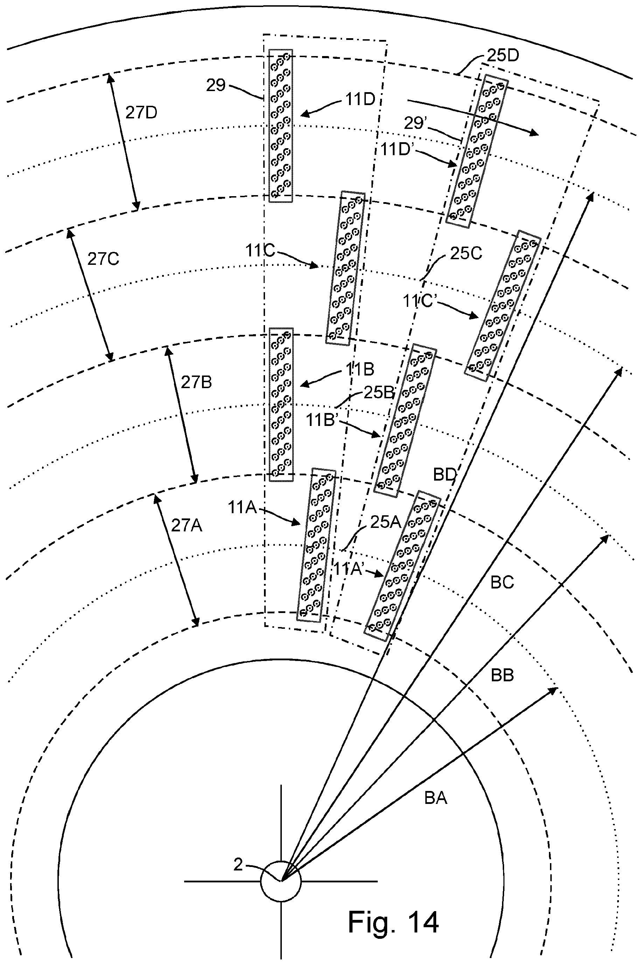

Bei dem Ausführungsbeispiel in Fig. 14 sind auf jedem Druckring 27A, 27B, 27C, 27D jeweils zwei Emitteranordnungen 11A, 11A' bzw. 11B, 11B' bzw. 11C, 11C' bzw. 11D , 11D', die unterschiedlichen Druckmodulen 29, 29' zugeordnet sind, in Umfangsrichtung zueinander versetzt angeordnet. Jedes diese Druckmodule arbeitet nach dem vorstehend beschriebenen Verfahren. In entsprechender Weise können bei Bedarf auf einem Druckring auch mehr als zwei Emitteranordnungen 11A, 11A' bzw. 11B, 11B' bzw. 11C, 11C' bzw. 11D , 11D' in Umfangsrichtung zueinander versetzt angeordnet sein. Mit den einzelnen Druckmodulen 29, 29' können unterschiedliche Materialien auf die Unterlage 1 aufgebracht werden. Diese können sich insbesondere hinsichtlich ihrer Farbe oder hinsichtlich ihrer mechanischen Eigenschaften voneinander unterscheiden.

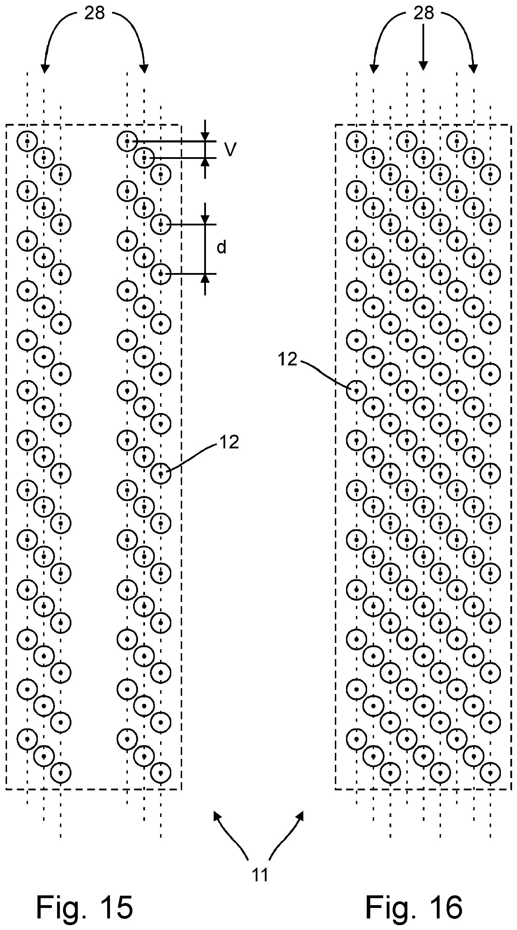

Wie in Fig. 15 zu sehen ist, kann die Emitteranordnung 11 auch mehrere Gruppen 28 von Emitterspalten aufweisen, bei denen die Emitter 12 der einzelnen Gruppen 28 jeweils in der Ebene, in der die Emitter 12 liegen, rechtwinklig zur Längserstreckung der Emitterspalten zueinander versetzt bzw. verschoben sind.

Jede Gruppe 28 hat jeweils die gleiche Anzahl und Anordnung von Emitterspalten bzw. Emittern 12. Innerhalb der Gruppen 28 sind die der betreffenden Gruppe 28 zugeordneten Emitterspalten in Längserstreckung der Emitterspalten etwas zueinander versetzt, wobei der Versatz V kleiner ist als der Rasterabstand d, den die Emitter 12 innerhalb der Emitterspalten haben. Dabei wird unter dem Rasterabstand d der Abstand der Mittelpunkte zueinander benachbarter Emitter 12 einer Düsenspalte, also der Abstand, den die Flächenschwerpunkte der Düsenöffnungen einer Emitterspalte zueinander haben, verstanden.

Der Abstand zwischen zueinander benachbarten Emitterspalten einer Gruppe 28 kann kleiner sein als der Abstand zueinander benachbarter Gruppen (Fig. 15). Die Abstände können aber auch übereinstimmen (Fig. 16).

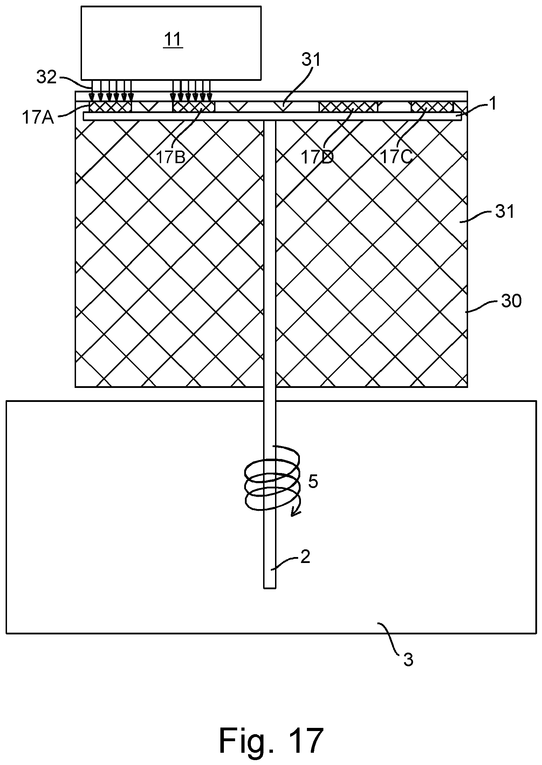

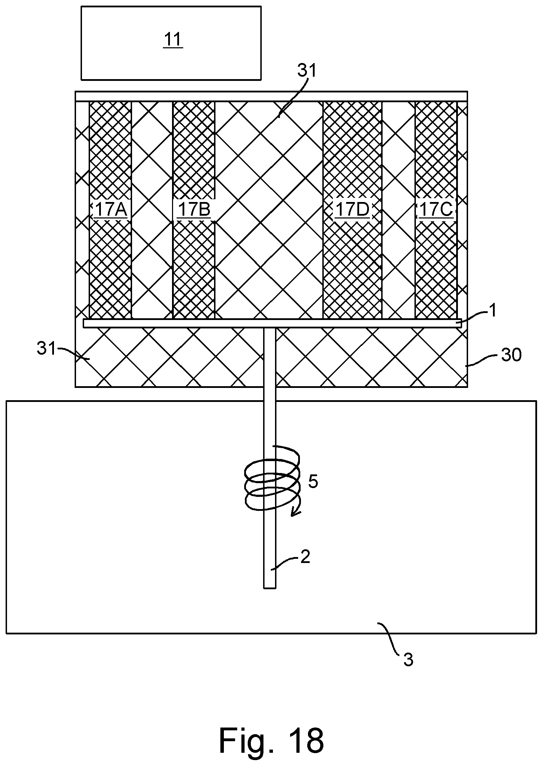

Bei einem in Fig. 17 bis 19 dargestellten Ausführungsbeispiel der Erfindung wird eine Vorrichtung bereitgestellt, die einen Behälter 30 aufweist, in dem ein flüssiges, pastöses oder pulverförmiges Material 31 auf eine Unterlage 1 aufgebracht wird. Zur Bestrahlung des Materials 31 mit einer energiereichen elektromagnetischen Strahlung 32 weist die eine Emitteranordnung 11, 11A, 11B, 11C, 11D mit mehreren zueinander beabstandeten Strahlungs-Emittern 12 auf, die jeweils als Leuchtdioden ausgestaltet sind. Zur Bündelung bzw. Fokussierung der von den einzelnen Emittern 12 abgegebenen Strahlung 32 ist jeweils im Strahlengang der Emitter 12 eine in der Zeichnung nicht näher dargestellte Optik angeordnet.

Die Wellenlänge und die Leistung der mittels der Emitter 12 erzeugbaren elektromagnetischen Strahlung 32 sind derart auf das fließfähige Material 31 abgestimmt, dass dieses durch Bestrahlung mit der elektromagnetischen Strahlung 32 an der Bestrahlungsstelle verfestigt werden kann. Unter "verfestigen" wird bei einem flüssigen oder fließfähigen Material 31 verstanden, dass das Material 31 zu einem Festkörpermaterial gehärtet wird, insbesondere durch Vernetzen von in dem Material enthaltenen Polymeren und/oder Copolymeren. Bei einem pulverförmigen Material 31 wird unter "verfestigen" verstanden, dass als Festkörperpartikel vorliegende Materialpartikel durch Bestrahlung mit der elektromagnetischen Strahlung 32 derart erhitzt und anschließend abgekühlt werden, das sie sich fest miteinander verbinden.

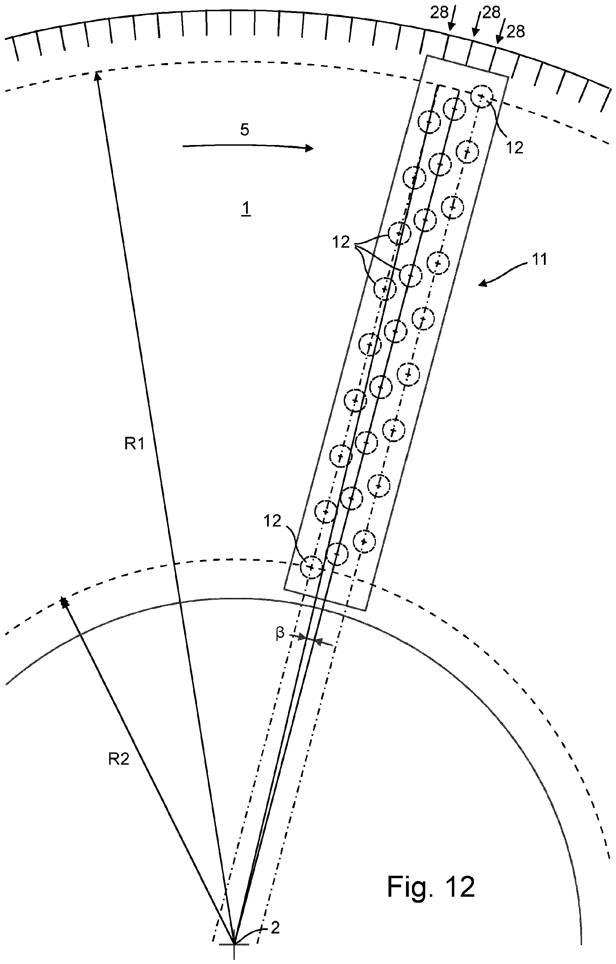

Die Emitteranordnung 11, 11A, 11B, 11C, 11D weist mehrere Emitterspalten 13A, 13B, 13C auf, in denen jeweils die Mittelpunkte der Emitter 12 in gerader Linie zueinander versetzt sind. Die Anordnung der Strahlungs-Emitter 12 entspricht der Anordnung der als Düsen ausgestalteten Emitter 12 in den Figuren 3, 6, 8, 10 und 12 bis 16, so dass die Beschreibung zu den in diesen Figuren abgebildeten Emitteranordnungen 11, 11A, 11B, 11C, 11D für das Ausführungsbeispiel gemäß Fig. 17 bis 19 entsprechend gilt, jedoch mit dem Unterschied, dass die Emitter 12 bei dem Ausführungsbeispiel gemäß Fig. 17 bis 19 anstelle von Material Strahlung 32 abgeben, und dass die Strahlung 32 auf das fließfähige Material 31 gerichtet ist.

Die Unterlage wird in dem Behälter 30 relativ zur Emitteranordnung 11, 11A, 11B, 11C, 11D um eine Drehachse 2 drehpositioniert und die mittels der Emitter 12 erzeugte Strahlung wird derart auf eine an der Oberfläche des Materials 31 befindliche Materialschicht gerichtet, dass das Material 31 an mindestens einer Bestrahlungsstelle verfestigt wird.

Die Emitteranordnung 11 ist mit einem Druckpuffer 15 verbunden, in dem für jeden Emitter der Emitteranordnung 11 jeweils ein Aktivierungssignal zwischengespeichert werden kann. Zur Ansteuerung der Strahlungs-Emitter 12 ist eine Ansteuereinrichtung vorgesehen, die einen Triggereingang aufweist, Bei jedem Trigger, der am Triggereingang empfangen wird, geben alle Emitter 12 der Emitteranordnung 11, für die im Druckerpuffer 15 jeweils der Wert "1" abgelegt ist, Strahlung in Richtung auf das Material 31 ab. Emitter 12, für die im Druckerpuffer der Wert "0" abgelegt ist, werden beim Empfangen eines Triggers nicht betätigt, d.h. diese Emitter 12 geben keine Strahlung ab. Die Fig. 4, 6,und 8, welche die Aktivierungssignalwerte für die Emitteranordnung 11 an den einzelnen Triggerstellen für die in Fig. 1 und 2 gezeigte Vorrichtung zeigen, gelten für das Ausführungsbeispiel in Fig. 17 bis 19 entsprechend.

Die Unterlage 1 steht bei dem in Fig. 17 bis 19 gezeigten Ausführungsbeispiel mit einer ersten Positioniereinrichtung in Antriebsverbindung, die einen ersten Antriebsmotor 4 hat, mittels welchem die Unterlage 1 in Richtung des Pfeils 5 drehantreibbar und entsprechend einem von einer Ansteuereinrichtung 6 bereitgestellten Drehlagen-Sollwertsignal positionierbar ist. Der erste Antriebsmotor 5 ist zu diesem Zweck mit einem in die Ansteuereinrichtung 6 integrierten ersten Lageregler verbunden, der einen Encoder 7 zur Erfassung eines Drehlagesignals für die Unterlage 1 aufweist. Mit Hilfe der ersten Positioniereinrichtung kann die Unterlage 1 kontinuierlich und ohne anzuhalten über nahezu beliebige Winkel von mehr als 360° relativ zur Halterung 3 um die Drehachse 2 gedreht werden.

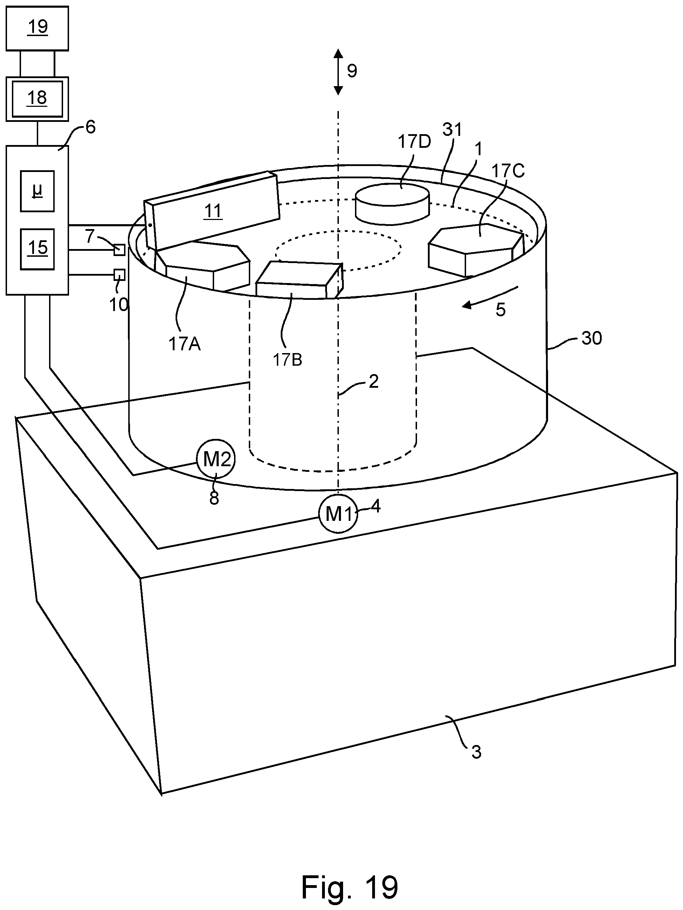

Die Unterlage 1 steht außerdem mit einer zweiten Positioniereinrichtung in Antriebsverbindung, die einen zweiten Antriebsmotor 8 hat, mittels welchem die Unterlage 3 in Richtung des Doppelpfeils 9 relativ zu der Halterung 3 auf- und ab verschiebbar und entsprechend einem von der Ansteuereinrichtung 6 bereitgestellten Höhenlagen-Sollwertsignal positionierbar ist (Fig. 19). Die Positionierung kann schrittweise oder kontinuierlich erfolgen. Der zweite Antriebsmotor 10 ist zu diesem Zweck mit einem in die Ansteuereinrichtung 6 integrierten zweiten Lageregler verbunden, der einen Lagesensor 10 zur Erfassung der Höhenlage der Unterlage 1 aufweist.

## Patentansprüche

1. Verfahren zum Herstellen mindestens einer Festkörperschicht gemäß vorgegebener Geometriedaten, die in einem Speicher (15) hinterlegt sind, wobei zur Abgabe von Materialportionen eines düsengängigen Materials auf eine Unterlage (1) und/oder eine darauf befindliche verfestigte Materialschicht mindestens eine Emitteranordnung (11, 11A, 11B, 11C, 11D) mit mehreren zueinander beabstandeten, als Materialabgabedüsen ausgebildeten Emittern (12) bereitgestellt wird, wobei die Emitteranordnung (11, 11A, 11B, 11C, 11D) mehrere Emitterspalten (13A, 13B, 13C) aufweist, in denen die Mittelpunkte der Emitter (12) jeweils in gerader Linie zueinander versetzt sind, wobei die Unterlage (1) relativ zur Emitteranordnung (11, 11A, 11B, 11C, 11D) um eine Drehachse (2) drehpositioniert und die Materialportionen mittels der Emitter (12) auf die Unterlage (1) und/oder die darauf befindliche verfestigte Materialschicht aufgebracht und danach verfestigt werden, wobei der Mittelpunkt des am weitesten von der Drehachse (2) entfernten Emitters (12) der Emitteranordnung (11, 11A, 11B, 11C, 11D) einen ersten radialen Abstand (R1) zur Drehachse (2) und der Mittelpunkt des am dichtesten an der Drehachse (2) angeordneten Emitters (12) einen zweiten radialen Abstand (R2) zur Drehachse (2) aufweist, wobei ein Triggersignal erzeugt wird, das Triggerstellen (20, 21, 22) für die Drehlage der Emitteranordnung (11, 11A, 11B, 11C, 11D) relativ zur Unterlage (1) definiert, wobei für die einzelnen Emitter (12) in Abhängigkeit von den im Speicher (15) abgelegten Geometriedaten und/oder in Abhängigkeit von der Position, an der der betreffende Emitter (12) relativ zur Unterlage (1) angeordnet ist, wenn dieser relativ zur Emitteranordnung (11, 11A, 11B, 11C, 11D) an der jeweiligen Triggerstelle (20, 21, 22) positioniert ist, jeweils ein Aktivierungssignal erzeugt und zwischengespeichert wird, wobei die Emitter (12) an den Triggerstellen (20, 21, 22) jeweils derart angesteuert werden, dass nur diejenigen Emitter (12) Material abgeben, bei denen das zuvor zwischengespeicherte Aktivierungssignal gesetzt ist, wobei der Winkel zwischen zueinander benachbarten Triggerstellen (20, 21, 22) derart gewählt wird, dass er dem Winkel (α) entspricht, den eine erste Radiallinie (23) und eine zweite Radiallinie (24) zwischen sich einschließen, wobei die erste Radiallinie (23) von der Drehachse (2) zum Schnittpunkt zwischen einer ersten Emitterspalte (13A) und einer zu der Drehachse (2) konzentrischen Bezugskreislinie (25, 25A, 25B, 25C, 25D) und die zweite Radiallinie (24) von der Drehachse (2) zum Schnittpunkt zwischen einer zur ersten Emitterspalte (13A) in Umfangsrichtung der Drehachse (2) benachbarten zweiten Emitterspalte (13B) und der Bezugskreislinie (25, 25A, 25B, 25C, 25D) verläuft, wobei der Radius der Bezugskreislinie (25, 25A, 25B, 25C, 25D) kleiner als die Summe aus 90% des ersten radialen Abstands (R1) und 10% des zweiten radialen Abstands (R2) ist, und wobei der Radius der Bezugskreislinie (25, 25A, 25B, 25C, 25D) größer als die Summe aus 10% des ersten radialen Abstands (R1) und 90% des zweiten radialen Abstands (R2) ist.

2. Verfahren zum Herstellen mindestens einer Festkörperschicht gemäß vorgegebener Geometriedaten, die in einem Speicher (15) hinterlegt sind, wobei ein Behälter (30) bereitgestellt wird, in dem mindestens eine Materialschicht aus einem flüssigen, pastösen oder pulverförmigen Material (31) auf eine Unterlage (1) aufgebracht wird, wobei zur Bestrahlung des Materials mit einer das Material verfestigenden Strahlung eine Emitteranordnung mit mehreren zueinander beabstandeten, der Materialschicht zugewandten Strahlungs-Emittern (12) bereitgestellt wird, wobei die Emitteranordnung (11, 11A, 11B, 11C, 11D) mehrere Emitterspalten (13A, 13B, 13C) aufweist, in denen die Mittelpunkte der Emitter (12) jeweils in gerader Linie zueinander versetzt sind, wobei die Unterlage (1) relativ zur Emitteranordnung (11, 11A, 11B, 11C, 11D) um eine Drehachse (2) drehpositioniert und die Strahlung mittels der Emitter (12) derart auf die Materialschicht gerichtet wird, dass das Material an mindestens einer Bestrahlungsstelle verfestigt wird, wobei der Mittelpunkt des am weitesten von der Drehachse (2) entfernten Emitters (12) der Emitteranordnung (11, 11A, 11B, 11C, 11D) einen ersten radialen Abstand (R1) zur Drehachse (2) und der Mittelpunkt des am dichtesten an der Drehachse (2) angeordneten Emitters (12)einen zweiten radialen Abstand (R2) zur Drehachse (2) aufweist, wobei ein Triggersignal erzeugt wird, das Triggerstellen (20, 21, 22) für die Drehlage der Emitteranordnung (11, 11A, 11B, 11C, 11D) relativ zur Unterlage (1) definiert, wobei für die einzelnen Emitter (12) in Abhängigkeit von den im Speicher (15) abgelegten Geometriedaten und/oder in Abhängigkeit von der Position, an der der betreffende Emitter (12) relativ zur Unterlage (1) angeordnet ist, wenn dieser relativ zur Emitteranordnung (11, 11A, 11B, 11C, 11D) an der jeweiligen Triggerstelle (20, 21, 22) positioniert ist, jeweils ein Aktivierungssignal erzeugt und zwischengespeichert wird, wobei die Emitter (12) an den Triggerstellen (20, 21, 22) jeweils derart angesteuert werden, dass nur diejenigen Emitter (12) Strahlung abgeben, bei denen das zuvor zwischengespeicherte Aktivierungssignal gesetzt ist, wobei der Winkel zwischen zueinander benachbarten Triggerstellen (20, 21, 22) derart gewählt wird, dass er dem Winkel (α) entspricht, den eine erste Radiallinie (23) und eine zweite Radiallinie (24) zwischen sich einschließen, wobei die erste Radiallinie (23) von der Drehachse (2) zum Schnittpunkt zwischen einer ersten Emitterspalte (13A) und einer zu der Drehachse (2) konzentrischen Bezugskreislinie (25, 25A, 25B, 25C, 25D) und die zweite Radiallinie (24) von der Drehachse (2) zum Schnittpunkt zwischen einer zur ersten Emitterspalte (13A) in Umfangsrichtung der Drehachse (2) benachbarten zweiten Emitterspalte (13B) und der Bezugskreislinie (25, 25A, 25B, 25C, 25D) verläuft, wobei der Radius der Bezugskreislinie (25, 25A, 25B, 25C, 25D) kleiner als die Summe aus 90% des ersten radialen Abstands (R1) und 10% des zweiten radialen Abstands (R2) ist, und wobei der Radius der Bezugskreislinie (25, 25A, 25B, 25C, 25D) größer als die Summe aus 10% des ersten radialen Abstands (R1) und 90% des zweiten radialen Abstands (R2) ist.

3. Verfahren nach Anspruch 1 oder 2, **dadurch gekennzeichnet, dass** der Radius der Bezugskreislinie (25, 25A, 25B, 25C, 25D) kleiner als die Summe aus 80% des ersten radialen Abstands (R1) und 20% des zweiten radialen Abstands (R2) ist, und dass der Radius der Bezugskreislinie (25, 25A, 25B, 25C, 25D) größer als die Summe aus 20% des ersten radialen Abstands (R1) und 80% des zweiten radialen Abstands (R2) ist.

4. Verfahren nach Anspruch 1 oder 2, **dadurch gekennzeichnet, dass** der Radius der Bezugskreislinie (25, 25A, 25B, 25C, 25D) kleiner als die Summe aus 70% des ersten radialen Abstands (R1) und 30% des zweiten radialen Abstands (R2) ist, und dass der Radius der Bezugskreislinie (25, 25A, 25B, 25C, 25D) größer als die Summe aus 30% des ersten radialen Abstands (R1) und 70% des zweiten radialen Abstands (R2) ist.

5. Verfahren nach Anspruch 1 oder 2, **dadurch gekennzeichnet, dass** der Radius der Bezugskreislinie (25, 25A, 25B, 25C, 25D) kleiner als die Summe aus 60% des ersten radialen Abstands (R1) und 40% des zweiten radialen Abstands (R2) ist, und dass der Radius der Bezugskreislinie (25, 25A, 25B, 25C, 25D) größer als die Summe aus 40% des ersten radialen Abstands (R1) und 60% des zweiten radialen Abstands (R2) ist.

6. Verfahren nach einem der Ansprüche 1 bis 5, **dadurch gekennzeichnet, dass** eine Emitteranordnung bereitgestellt wird, die mindestens zwei parallel zueinander angeordnete Emitterspalten aufweist, in denen jeweils die Mittelpunkte der zu der betreffenden Emitterspalte gehörenden Emitter in gerader Linie zueinander versetzt sind.

7. Verfahren nach Anspruch 6, **dadurch gekennzeichnet, dass** jeder Triggerstelle (20, 21, 22) jeweils eine Emitterspalte (13A, 13B, 13C) zugeordnet wird, und dass die für die einzelnen Triggerstellen (20, 21, 22) vorgesehenen Aktivierungssignals jeweils nur für die Emitter (12) der der betreffenden Triggerstelle (20, 21, 22) zugeordneten Emitterspalte (13A, 13B, 13C) in Abhängigkeit von den im Speicher (15) abgelegten Geometriedaten und in Abhängigkeit von der Position, an der der betreffende Emitter (12) angeordnet ist, erzeugt werden, und dass die Aktivierungssignale für die nicht in dieser Emitterspalte (13A, 13B, 13C) angeordneten Emitter (12) derart gesetzt werden, dass diese Emitter (12) nicht aktiviert werden, wenn die Emitteranordnung (11, 11A, 11B, 11C, 11D) relativ zur Unterlage an der Triggerstelle (20, 21, 22) positioniert wird.

8. Verfahren nach Anspruch 6 oder 7, **dadurch gekennzeichnet, dass** die Emitterspalten (13A, 13B, 13C) der Emitteranordnung (11, 11A, 11B, 11C, 11D) symmetrisch zu einer Radialebene angeordnet werden, die durch die Drehachse (2) und eine Normale auf die Drehachse (2) aufgespannt wird, derart, dass die Emitterspalten (13A, 13B, 13C) parallel zu dieser Radialebene verlaufen.

9. Verfahren nach einem der Ansprüche 1 bis 8, **dadurch gekennzeichnet, dass** zum Bedrucken von konzentrisch zur Drehachse (2) angeordneten, jeweils durch eine inneren und eine äußere Kreisbahn begrenzten Druckringen (27A, 27B, 27C, 27D) zumindest eine erste und eine zweite Emitteranordnung (11A, 11B, 11C, 11D) bereitgestellt werden, dass diese Emitteranordnungen (11A, 11B, 11C, 11D) derart relativ zu der Drehachse (2) positioniert werden, dass sich der arithmetische Mittelwert der inneren und der äu-ßeren Kreisbahn der ersten Emitteranordnung (11A) vom arithmetischen Mittelwert der inneren und der äußeren Kreisbahn der zweiten Emitteranordnung (11B) unterscheidet, dass zum Erzeugen des Triggersignals der ersten Emitteranordnung (11A) eine Bezugskreislinie (25A) mit einem ersten Radius und zum Erzeugen des Triggersignals der zweiten Emitteranordnung (11B) eine Bezugskreislinie (25B) mit einem zweiten, vom ersten Radius abweichenden Radius verwendet wird, und dass der erste Radius nach einem der Ansprüche 1 bis 5 in Abhängigkeit vom ersten und zweiten radialen Abstand der ersten Emitteranordnung (11A) und der zweite Radius nach einem der Ansprüche 1 bis 5 in Abhängigkeit vom ersten und zweiten radialen Abstand der zweiten Emitteranordnung (11B) gewählt wird.

10. Verfahren nach einem der Ansprüche 1 bis 9, **dadurch gekennzeichnet, dass** mindestens zwei Emitteranordnungen (11A, 11B, 11C, 11D) bereitgestellt werden, die bezüglich der Drehachse (2) um einen Drehwinkel zueinander versetzt sind, und dass die Emitter (12) der einzelnen Emitteranordnungen (11A, 11B, 11C, 11D) jeweils nach mindestens einem der Ansprüche 1 bis 8 gesteuert werden.

11. Verfahren nach einem der Ansprüche 1 bis 10, **dadurch gekennzeichnet, dass** die Mittelpunkte von innerhalb der Emitterspalten (13A, 13B, 13C) zueinander benachbarten Emitter (12) in einem konstanten ersten Rasterstabstand zueinander angeordnet sind, dass zueinander benachbarte Emitterspalten (13A, 13B, 13C) jeweils in einem konstanten zweiten Rasterstabstand zueinander versetzt sind, und dass der erste Rasterabstand um weniger als 20 Prozent, insbesondere um weniger als 10 Prozent vom zweiten Rasterabstand abweicht und insbesondere mit diesem übereinstimmt.

12. Verfahren nach einem der Ansprüche 1 oder 3 bis 11, **dadurch gekennzeichnet, dass** zum Herstellen eines dreidimensionalen Formgegenstands (17A, 17B, 17C, 17D) mehrere Materialschichten des düsengängigen Materials übereinander aufgetragen werden, wobei der Abstand zwischen der Emitteranordnung (11, 11A, 11B, 11C, 11D) und der Unterlage (1) jeweils von Schicht zu Schicht um die Dicke der zuletzt aufgetragenen Materialschicht vergrößert und jede Materialschicht nach ihrem Auftragen jeweils verfestigt wird, bevor auf diese Materialschicht eine weitere Materialschicht aufgetragen wird.

13. Verfahren nach einem der Ansprüche 2 bis 11, **dadurch gekennzeichnet, dass** zum Herstellen eines dreidimensionalen Formgegenstands (17A, 17B, 17C, 17D) mehrere Materialschichten des flüssigen, pastösen oder pulverförmigen Materials übereinander durch Bestrahlen mit der Emitteranordnung (11, 11A, 11B, 11C, 11D) verfestigt werden.

## Claims

1. Method for producing at least one solid layer in accordance with predefined geometry data stored in a memory (15), wherein at least one emitter arrangement (11, 11A, 11B, 11C, 11D) having multiple spaced-apart emitters (12) in the form of material dispensing nozzles is provided to dispense portions of a material, that can be passed through nozzles, onto a substrate (1) and/or a solidified material layer located on it, wherein the emitter arrangement (11, 11A, 11B, 11C, 11D) has multiple emitter columns (13A, 13B, 13C), in which the centre points of the emitters (12) are each offset in relation to one another in a straight line, wherein the substrate (1) is rotationally positioned about an axis of rotation (2) relative to the emitter arrangement (11, 11A, 11B, 11C, 11D) and, by means of the emitters (12), the material portions are applied to the substrate (1) and/or the solidified material layer located on it and then solidified, wherein the centre point of that emitter (12) of the emitter arrangement (11, 11A, 11B, 11C, 11D) that is furthest away from the axis of rotation (2) is at a first radial distance (R1) from the axis of rotation (2) and the centre point of the emitter (12) arranged closest to the axis of rotation (2) is at a second radial distance (R2) from the axis of rotation (2), wherein a trigger signal defining trigger points (20, 21, 22) for the rotational position of the emitter arrangement (11, 11A, 11B, 11C, 11D) relative to the substrate (1) is generated, wherein, for the individual emitters (12) and on the basis of the geometry data stored in the memory (15) and/or on the basis of the position at which the relevant emitter (12) is arranged relative to the substrate (1) when said relevant emitter is positioned at the respective trigger point (20, 21, 22) relative to the emitter arrangement (11, 11A, 11B, 11C, 11D), a respective activation signal is generated and temporarily stored, wherein the emitters (12) are each actuated at the trigger points (20, 21, 22) in such a way that only those emitters (12) at which the activation signal temporarily stored beforehand is provided dispense material, wherein the angle between mutually adjacent trigger points (20, 21, 22) is selected such that it corresponds to the angle (α) formed between a first radial line (23) and a second radial line (24), wherein the first radial line (23) runs from the axis of rotation (2) to the point of intersection of a first emitter column (13A) and a circular reference line (25, 25A, 25B, 25C, 25D) that is concentric with the axis of rotation (2), and the second radial line (24) runs from the axis of rotation (2) to the point of intersection of a second emitter column (13B), which is adjacent to the first emitter column (13A) in the circumferential direction of the axis of rotation (2), and the circular reference line (25, 25A, 25B, 25C, 25D), wherein the radius of the circular reference line (25, 25A, 25B, 25C, 25D) is less than the sum of 90% of the first radial distance (R1) and 10% of the second radial distance (R2), and wherein the radius of the circular reference line (25, 25A, 25B, 25C, 25D) is greater than the sum of 10% of the first radial distance (R1) and 90% of the second radial distance (R2).

2. Method for producing at least one solid layer in accordance with predefined geometry data stored in a memory (15), wherein a container (30) in which at least one layer of a liquid, pastry or powdered material (31) is applied to a substrate (1) is provided, wherein an emitter arrangement having multiple spaced-apart radiation emitters (12) facing towards the material layer is provided to irradiate the material with radiation that solidifies the material, wherein the emitter arrangement (11, 11A, 11B, 11C, 11D) has multiple emitter columns (13A, 13B, 13C), in which the centre points of the emitters (12) are each offset in relation to one another in a straight line, wherein the substrate (1) is rotationally positioned about an axis of rotation (2) relative to the emitter arrangement (11, 11A, 11B, 11C, 11D) and, by means of the emitters (12), the radiation is directed onto the material layer in such a way that the material is solidified at least at one irradiation location, wherein the centre point of that emitter (12) of the emitter arrangement (11, 11A, 11B, 11C, 11D) that is furthest away from the axis of rotation (2) is at a first radial distance (R1) from the axis of rotation (2) and the centre point of the emitter (12) arranged closest to the axis of rotation (2) is at a second radial distance (R2) from the axis of rotation (2), wherein a trigger signal defining trigger points (20, 21, 22) for the rotational position of the emitter arrangement (11, 11A, 11B, 11C, 11D) relative to the substrate (1) is generated, wherein, for the individual emitters (12) and on the basis of the geometry data stored in the memory (15) and/or on the basis of the position at which the relevant emitter (12) is arranged relative to the substrate (1) when said relevant emitter is positioned at the respective trigger point (20, 21, 22) relative to the emitter arrangement (11, 11A, 11B, 11C, 11D), a respective activation signal is generated and temporarily stored, wherein the emitters (12) are each actuated at the trigger points (20, 21, 22) in such a way that only those emitters (12) at which the activation signal temporarily stored beforehand is provided dispense radiation, wherein the angle between mutually adjacent trigger points (20, 21, 22) is selected such that it corresponds to the angle (α) formed between a first radial line (23) and a second radial line (24), wherein the first radial line (23) runs from the axis of rotation (2) to the point of intersection of a first emitter column (13A) and a circular reference line (25, 25A, 25B, 25C, 25D) that is concentric with the axis of rotation (2), and the second radial line (24) runs from the axis of rotation (2) to the point of intersection of a second emitter column (13B), which is adjacent to the first emitter column (13A) in the circumferential direction of the axis of rotation (2), and the circular reference line (25, 25A, 25B, 25C, 25D), wherein the radius of the circular reference line (25, 25A, 25B, 25C, 25D) is less than the sum of 90% of the first radial distance (R1) and 10% of the second radial distance (R2), and wherein the radius of the circular reference line (25, 25A, 25B, 25C, 25D) is greater than the sum of 10% of the first radial distance (R1) and 90% of the second radial distance (R2).

3. Method according to Claim 1 or 2, **characterized in that** the radius of the circular reference line (25, 25A, 25B, 25C, 25D) is less than the sum of 80% of the first radial distance (R1) and 20% of the second radial distance (R2), and **in that** the radius of the circular reference line (25, 25A, 25B, 25C, 25D) is greater than the sum of 20% of the first radial distance (R1) and 80% of the second radial distance (R2).

4. Method according to Claim 1 or 2, **characterized in that** the radius of the circular reference line (25, 25A, 25B, 25C, 25D) is less than the sum of 70% of the first radial distance (R1) and 30% of the second radial distance (R2), and **in that** the radius of the circular reference line (25, 25A, 25B, 25C, 25D) is greater than the sum of 30% of the first radial distance (R1) and 70% of the second radial distance (R2).

5. Method according to Claim 1 or 2, **characterized in that** the radius of the circular reference line (25, 25A, 25B, 25C, 25D) is less than the sum of 60% of the first radial distance (R1) and 40% of the second radial distance (R2), and **in that** the radius of the circular reference line (25, 25A, 25B, 25C, 25D) is greater than the sum of 40% of the first radial distance (R1) and 60% of the second radial distance (R2).

6. Method according to one of Claims 1 to 5, **characterized in that** an emitter arrangement having at least two emitter columns, which are arranged parallel to one another and in each of which the centre points of the emitters belonging to the relevant emitter column are offset in relation to one another in a straight line, is provided.

7. Method according to Claim 6, **characterized in that** a respective emitter column (13A, 13B, 13C) is assigned to each trigger point (20, 21, 22), and **in that** the activation signals provided for the individual trigger points (20, 21, 22) are each generated only for the emitters (12) of the emitter column (13A, 13B, 13C) assigned to the relevant trigger point (20, 21, 22) on the basis of the geometry data stored in the memory (15) and on the basis of the position at which the relevant emitter (12) is arranged, and **in that** the activation signals for the emitters (12) not arranged in this emitter column (13A, 13B, 13C) are provided such that these emitters (12) are not activated when the emitter arrangement (11, 11A, 11B, 11C, 11D) is positioned at the trigger point (20, 21, 22) relative to the substrate.

8. Method according to Claim 6 or 7, **characterized in that** the emitter columns (13A, 13B, 13C) of the emitter arrangement (11, 11A, 11B, 11C, 11D) are arranged symmetrically in relation to a radial plane spanned by the axis of rotation (2) and a normal to the axis of rotation (2), in such a way that the emitter columns (13A, 13B, 13C) run parallel to this radial plane.

9. Method according to one of Claims 1 to 8, **characterized in that** at least one first and one second emitter arrangement (11A, 11B, 11C, 11D) are provided to print printed rings (27A, 27B, 27C, 27D) that are arranged concentrically with the axis of rotation (2) and are each delimited by an inner and an outer circular trajectory, **in that** these emitter arrangements (11A, 11B, 11C, 11D) are positioned relative to the axis of rotation (2) in such a way that the arithmetic mean value of the inner and the outer circular trajectory of the first emitter arrangement (11A) differs from the arithmetic mean value of the inner and the outer circular trajectory of the second emitter arrangement (11B), **in that** a circular reference line (25A) with a first radius is used to generate the trigger signal of the first emitter arrangement (11A) and a circular reference line (25B) with a second radius differing from the first radius is used to generate the trigger signal of the second emitter arrangement (11B), and **in that** the first radius is selected according to one of Claims 1 to 5 on the basis of the first and the second radial distance of the first emitter arrangement (11A) and the second radius is selected according to one of Claims 1 to 5 on the basis of the first and the second radial distance of the second emitter arrangement (11B).

10. Method according to one of Claims 1 to 9, **characterized in that** at least two emitter arrangements (11A, 11B, 11C, 11D) that are offset in relation to one another by a rotational angle with respect to the axis of rotation (2) are provided, and **in that** the emitters (12) of the individual emitter arrangements (11A, 11B, 11C, 11D) are each controlled according to at least one of Claims 1 to 8.

11. Method according to one of Claims 1 to 10, **characterized in that** the centre points of emitters (12) that are adjacent to one another within the emitter columns (13A, 13B, 13C) are arranged at a constant first raster distance in relation to one another, **in that** mutually adjacent emitter columns (13A, 13B, 13C) are each offset in relation to one another at a constant second raster distance, and **in that** the first raster distance differs from the second raster distance by less than 20 percent, in particular by less than 10 percent, and in particular matches it.

12. Method according to one of Claims 1 or 3 to 11, **characterized in that** multiple layers of the material that can be passed through a nozzle are deposited one on top of another to produce a three-dimensional shaped object (17A, 17B, 17C, 17D), wherein the distance between the emitter arrangement (11, 11A, 11B, 11C, 11D) and the substrate (1) increases in each case from layer to layer by the thickness of the last-deposited material layer, and each material layer is solidified after it has been deposited and before a further material layer is deposited on this material layer.

13. Method according to one of Claims 2 to 11, **characterized in that** multiple layers of the liquid, pasty or powdered material on top of one another are solidified by irradiating them by means of the emitter arrangement (11, 11A, 11B, 11C, 11D) to produce a three-dimensional shaped object (17A, 17B, 17C, 17D).

## Revendications

1. Procédé de réalisation d'au moins une couche de matière solide selon des données géométriques spécifiées qui sont stockées dans une mémoire (15), au moins un ensemble d'émetteurs (11, 11A, 11B, 11C, 11D) comprenant plusieurs émetteurs (12) espacés les uns des autres et conçus comme des buses de distribution de matière étant prévu pour distribuer des portions d'une matière qui peut passer par des buses sur un substrat (1) et/ou une couche de matière solidifiée sur celui-ci, l'ensemble d'émetteurs (11, 11A, 11B, 11C, 11D) comportant plusieurs colonnes d'émetteurs (13A, 13B, 13C) dans lesquelles les centres des émetteurs (12) sont décalés les uns des autres suivant une ligne droite, le substrat (1) étant positionné en rotation autour d'un axe de rotation (2) par rapport à l'ensemble d'émetteurs (11, 11A, 11B, 11C, 11D) et les portions de matière étant appliquées puis solidifiées sur le substrat (1) et/ou sur la couche de matière solidifiée sur celui-ci au moyen des émetteurs (12), le centre de l'émetteur (12) de l'ensemble d'émetteurs (11, 11A, 11B, 11C, 11D) qui est le plus éloigné de l'axe de rotation (2) étant à une première distance radiale (R1) de l'axe de rotation (2) et le centre de l'émetteur (12) qui est le plus proche de l'axe de rotation (2) étant à une deuxième distance radiale (R2) de l'axe de rotation (2), un signal de déclenchement étant généré qui définit des points de déclenchement (20, 21, 22) pour la position en rotation de l'ensemble d'émetteurs (11, 11A, 11B, 11C, 11D) par rapport au substrat (1), un signal d'activation étant généré et mémorisé temporairement, pour chacun des émetteurs individuels (12), en fonction des données géométriques stockées dans la mémoire (15) et/ou en fonction de la position où l'émetteur concerné (12) est disposé par rapport au substrat (1), si ledit émetteur est positionné au point de déclenchement respectif (20, 21, 22) par rapport à l'ensemble d'émetteurs (11, 11A, 11B, 11C, 11D), les émetteurs (12) étant commandés aux points de déclenchement (20, 21, 22) de telle sorte que seuls les émetteurs (12), pour lesquels le signal d'activation précédemment mémorisé temporairement est généré, distribuent de la matière, l'angle formé entre des points de déclenchement mutuellement adjacents (20, 21, 22) étant choisi de manière à correspondre à l'angle (α) qu'une première ligne radiale (23) et une deuxième ligne radiale (24) forment entre elles, la première ligne radiale (23) s'étendant de l'axe de rotation (2) au point d'intersection situé entre une première colonne d'émetteurs (13A) et un cercle de référence (25, 25A, 25B, 25C, 25D) concentrique à l'axe de rotation (2) et la deuxième ligne radiale (24) s'étendant de l'axe de rotation (2) au point d'intersection situé entre une deuxième colonne d'émetteurs (13B), adjacente à la première colonne d'émetteurs (13A) dans la direction circonférentielle de l'axe de rotation (2), et le cercle de référence (25, 25A, 25B, 25C, 25D), le rayon du cercle de référence (25, 25A, 25B, 25C, 25D) étant inférieur à la somme de 90 % de la première distance radiale (R1) et 10 % de la deuxième distance radiale (R2), et le rayon du cercle de référence (25, 25A, 25B, 25C, 25D) étant supérieur à la somme de 10 % de la première distance radiale (R1) et 90 % de la deuxième distance radiale (R2).

2. Procédé de réalisation d'au moins une couche de matière solide selon des données géométriques spécifiées qui sont stockées dans une mémoire (15), un récipient (30) étant prévu dans lequel au moins une couche d'une matière liquide, pâteuse ou pulvérulente (31) est appliquée sur un substrat (1), un ensemble d'émetteurs qui comprend plusieurs émetteurs de rayonnement (12) espacés les uns des autres et dirigés vers la couche de matière étant prévu pour irradier la matière avec un rayonnement qui solidifie la matière, l'ensemble d'émetteurs (11, 11A, 11B, 11C, 11D) comportant plusieurs colonnes d'émetteurs (13A, 13B, 13C) dans lesquelles les centres des émetteurs (12) sont décalés les uns des autres suivant une ligne droite, le substrat (1) étant positionné en rotation autour d'un axe de rotation (2) par rapport à l'ensemble d'émetteurs (11, 11A, 11B, 11C, 11D) et le rayonnement étant dirigé sur la couche de matière au moyen des émetteurs (12) de manière à solidifier la matière en au moins un point d'irradiation, le centre de l'émetteur (12) de l'ensemble d'émetteurs (11, 11A, 11B, 11C, 11D) qui est le plus éloigné de l'axe de rotation (2) étant à une première distance radiale (R1) de l'axe de rotation (2) et le centre de l'émetteur (12) qui est le plus proche de l'axe de rotation (2) étant à une deuxième distance radiale (R2) de l'axe de rotation (2), un signal de déclenchement étant généré qui définit des points de déclenchement (20, 21, 22) pour la position en rotation de l'ensemble d'émetteurs (11, 11A, 11B, 11C, 11D) par rapport au substrat (1), un signal d'activation étant généré et mémorisé temporairement pour chacun des émetteurs individuels (12) en fonction des données géométriques stockées dans la mémoire (15) et/ou en fonction de la position où l'émetteur concerné (12) est disposé par rapport au substrat (1), si celui-ci est positionné au point de déclenchement respectif (20, 21, 22) par rapport à l'ensemble d'émetteurs (11, 11A, 11B, 11C, 11D), les émetteurs (12) étant commandés respectivement aux points de déclenchement (20, 21, 22) de manière que seuls les émetteurs (12), pour lesquels le signal d'activation précédemment mémorisé temporairement est généré, émettent un rayonnement, l'angle formé entre des points de déclenchement mutuellement adjacents (20, 21, 22) étant choisi de manière à correspondre à l'angle (α) qu'une première ligne radiale (23) et une deuxième ligne radiale (24) forment entre elles, la première ligne radiale (23) s'étendant de l'axe de rotation (2) au point d'intersection situé entre une première colonne d'émetteurs (13A) et un cercle de référence (25, 25A, 25B, 25C, 25D) concentrique à l'axe de rotation (2) et la deuxième ligne radiale (24) s'étendant de l'axe de rotation (2) au point d'intersection situé entre une deuxième colonne d'émetteurs (13B), adjacente à la première colonne d'émetteurs (13A) dans la direction circonférentielle de l'axe de rotation (2), et le cercle de référence (25, 25A, 25B, 25C, 25D), le rayon du cercle de référence (25, 25A, 25B, 25C, 25D) étant inférieur à la somme de 90 % de la première distance radiale (R1) et de 10 % de la deuxième distance radiale (R2), et le rayon du cercle de référence (25, 25A, 25B, 25C, 25D) étant supérieur à la somme de 10 % de la première distance radiale (R1) et de 90 % de la deuxième distance radiale (R2).

3. Procédé selon la revendication 1 ou 2, **caractérisé en ce que** le rayon du cercle de référence (25, 25A, 25B, 25C, 25D) est inférieur à la somme de 80 % de la première distance radiale (R1) et de 20 % de la deuxième distance radiale (R2) et **en ce que** le rayon du cercle de référence (25, 25A, 25B, 25C, 25D) est supérieur à la somme de 20 % de la première distance radiale (R1) et de 80 % de la deuxième distance radiale distance (R2).

4. Procédé selon la revendication 1 ou 2, **caractérisé en ce que** le rayon du cercle de référence (25, 25A, 25B, 25C, 25D) est inférieur à la somme de 70 % de la première distance radiale (R1) et de 30 % de la deuxième distance radiale (R2) et **en ce que** le rayon du cercle de référence (25, 25A, 25B, 25C, 25D) est supérieur à la somme de 30 % de la première distance radiale (R1) et de 70 % de la deuxième distance radiale (R2).

5. Procédé selon la revendication 1 ou 2, **caractérisé en ce que** le rayon du cercle de référence (25, 25A, 25B, 25C, 25D) est inférieur à la somme de 60 % de la première distance radiale (R1) et de 40 % de la deuxième distance radiale (R2) et **en ce que** le rayon du cercle de référence (25, 25A, 25B, 25C, 25D) est supérieur à la somme de 40 % de la première distance radiale (R1) et de 60 % de la deuxième distance radiale (R2).

6. Procédé selon l'une des revendications 1 à 5, **caractérisé en ce qu'**un ensemble d'émetteurs est prévu qui comporte au moins deux colonnes d'émetteurs qui sont disposées parallèlement l'une à l'autre et dans chacune desquelles les centres des émetteurs appartenant à la colonne d'émetteurs concernée sont décalés les uns des autres suivant une ligne droite.

7. Procédé selon la revendication 6, **caractérisé en ce que** chaque point de déclenchement (20, 21, 22) est associé à une colonne d'émetteurs (13A, 13B, 13C) et **en ce que** les signaux d'activation, prévus pour les points de déclenchement individuels (20, 21, 22), sont générés seulement pour les émetteurs (12) de la colonne d'émetteurs (13A, 13B, 13C), associée au point de déclenchement concerné (20, 21, 22), en fonction des données géométriques stockées dans la mémoire (15) et en fonction de la position où l'émetteur concerné (12) est disposé, et **en ce que** les signaux d'activation pour les émetteurs (12) qui ne sont pas disposés dans cette colonne d'émetteurs (13A, 13B, 13C) sont générés de manière que ces émetteurs (12) ne soient pas activés lorsque l'ensemble d'émetteurs (11, 11A, 11B, 11C, 11D) au point de déclenchement (20, 21, 22) par rapport au substrat.

8. Procédé selon la revendication 6 ou 7, **caractérisé en ce que** les colonnes d'émetteurs (13A, 13B, 13C) de l'ensemble d'émetteurs (11, 11A, 11B, 11C, 11D) sont disposées symétriquement par rapport à un plan radial qui passe par l'axe de rotation (2) et une normale à l'axe de rotation (2) de manière que les colonnes d'émetteurs (13A, 13B, 13C) s'étendent parallèlement à ce plan radial.

9. Procédé selon l'une des revendications 1 à 8, **caractérisé en ce que**
au moins un premier et un deuxième ensemble d'émetteurs (11A, 11B, 11C, 11D) sont prévus pour imprimer sur des anneaux d'impression (27A, 27B, 27C, 27D) disposés concentriquement à l'axe de rotation (2) et délimités chacun par une trajectoire circulaire intérieure et une trajectoire circulaire extérieure, **en ce que** ces ensembles d'émetteurs (11A, 11B, 11C, 11D) sont positionnés par rapport à l'axe de rotation (2) de manière que la moyenne arithmétique des trajectoires circulaires intérieure et extérieure du premier ensemble d'émetteurs (11A) diffère de la moyenne arithmétique des trajectoires circulaires intérieure et extérieure du deuxième ensemble d'émetteurs (11B), **en ce qu'**un cercle de référence (25A) ayant un premier rayon est utilisé pour générer le signal de déclenchement du premier ensemble d'émetteurs (11A), et un cercle de référence (25B) ayant un deuxième rayon, différent du premier rayon, est utilisé pour générer le signal de déclenchement du deuxième ensemble d'émetteurs (11B), et **en ce que** le premier rayon selon l'une des revendications 1 à 5 est choisi en fonction des première et deuxième distances radiales du premier ensemble d'émetteurs (11A) et le deuxième rayon selon l'une des revendications 1 à 5 est choisi en fonction des première et deuxième distances radiales du deuxième ensemble d'émetteurs (11B).

10. Procédé selon l'une des revendications 1 à 9, **caractérisé en ce qu'**au moins deux ensembles d'émetteurs (11A, 11B, 11C, 11D) sont prévus qui sont décalés l'un de l'autre d'un angle de rotation par rapport à l'axe de rotation (2), et **en ce que** les émetteurs (12) des différents ensembles d'émetteurs (11A, 11B, 11C, 11D) sont commandés chacun selon l'une au moins des revendications 1 à 8.

11. Procédé selon l'une des revendications 1 à 10, **caractérisé en ce que** les centres d'émetteurs mutuellement adjacents (12) à l'intérieur des colonnes d'émetteurs (13A, 13B, 13C) sont disposés suivant une première trame constante les uns par rapport aux autres, **en ce que** des colonnes d'émetteurs (13A, 13B, 13C) adjacentes les unes aux autres sont respectivement décalées les unes des autres d'une deuxième trame constante, et **en ce que** la première trame diffère de moins de 20 pour cent, en particulier de moins de 10 pour cent, de la deuxième trame et en particulier coïncide avec celle-ci.

12. Procédé selon l'une des revendications 1 ou 3 à 11, **caractérisé en ce que** plusieurs couches de la matière pouvant passer par des buses sont appliquées les unes au-dessus des autres pour produire un objet moulé tridimensionnel (17A, 17B, 17C, 17D), la distance entre l'ensemble d'émetteurs (11, 11A, 11B, 11C, 11D) et le substrat (1) étant augmentée d'une couche à l'autre de l'épaisseur de la couche de matière appliquée en dernier et chaque couche de matière étant solidifiée après l'application de celle-ci avant qu'une autre couche de matière ne soit appliquée sur cette couche de matière.

13. Procédé selon l'une des revendications 2 à 11, **caractérisé en ce que** plusieurs couches de la matière liquide, pâteuse ou pulvérulente sont solidifiées les unes au-dessus des autres par irradiation avec l'ensemble d'émetteurs (11, 11A, 11B, 11C, 11D) afin de réaliser un objet moulé tridimensionnel (17A, 17B, 17C, 17D) .
